(19) Europäisches Patentamt
European Patent Office
Office européen des brevets

(11) Veröffentlichungsnummer : **0 158 252**
**B1**

(12) # EUROPÄISCHE PATENTSCHRIFT

(45) Veröffentlichungstag der Patentschrift : **21.12.88**

(21) Anmeldenummer : **85103893.5**

(22) Anmeldetag : **01.04.85**

(51) Int. Cl.⁴ : **C 09 K 19/30**, C 09 K 19/34, C 09 K 19/42, C 07 C121/46, C 07 D319/06

(54) **Flüssigkristalline Phase.**

(30) Priorität : **07.04.84 DE 3413148**
**14.09.84 DE 3433708**

(43) Veröffentlichungstag der Anmeldung : **16.10.85 Patentblatt 85/42**

(45) Bekanntmachung des Hinweises auf die Patenterteilung : **21.12.88 Patentblatt 88/51**

(84) Benannte Vertragsstaaten :
**CH DE FR GB LI**

(56) *Entgegenhaltungen :*
**DE-A- 3 231 707**

(73) Patentinhaber: **Merck Patent Gesellschaft mit beschränkter Haftung**
**Frankfurter Strasse 250**
**D-6100 Darmstadt (DE)**

(72) Erfinder : **Scheuble, Bernhard, Dr.**
**Am Grenzweg 18**
**D-6146 Alsbach (DE)**
Erfinder : **Weber, Georg**
**Wilhelm-Leuschner-Strasse 38**
**D-6106 Erzhausen (DE)**
Erfinder : **Kawamoto, Kiyohiko**
**Coop Nomura 2-405**
**Aiko 910-1 Atsugi, 243 (JP)**
Erfinder : **Eidenschink, Rudolf, Dr.**
**Kornblumenstrasse 1**
**D-6115 Münster (DE)**
Erfinder : **Hittich, Reinhard, Dr.**
**Am Kirchberg 11**
**D-6101 Modautal 1 (DE)**

**EP 0 158 252 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung betrifft flüssigkristalline Phasen (FK-Phasen) mit niedriger optischer Anisotropie und breiten nematischen Phasen.

Für Flüssigkristall-Anzeigeelemente (FK-Anzeigeelemente) werden in zunehmendem Maße die Eigenschaften nematischer oder nematisch-cholesterischer flüssigkristalliner Materialien ausgenutzt, ihre optischen Eigenschaften wie Lichtabsorption, Lichtstreuung, Doppelbrechung, Reflexiorsvermögen oder Farbe unter dem Einfluß elektrischer Felder signifikant zu verändern. Die Funktion derartiger Anzeigeelemente beruht dabei beispielsweise auf den Phänomenen der dynamischen Streuung, der Deformation aufgerichteter Phasen, dem Guest-Host-Effekt, dem Schadt-Helfrich-Effekt in der verdrillten Zelle oder dem cholesterisch-nematischen Phasenübergang.

Für die technische Anwendung dieser Effekte in elektronischen Bauelementen werden flüssigkristalline Phasen benötigt, die einer Vielzahl von Anforderungen genügen müssen. Besonders wichtig sind hier die chemische Beständigkeit gegenüber Feuchtigkeit, Luft und physikalischen Einflüssen wie Wärme, Strahlung im infraroten, sichtbaren und ultravioletten Bereich und elektrische Gleich- und Wechselfelder. Ferner wird von technisch verwendbaren flüssigkristallinen Dielektrika eine flüssigkristalline Mesophase in einem geeigneten Temperaturbereich und eine möglichst niedrige Viskosität bei Raumtemperatur gefordert. Schließlich dürfen sie im Bereich des sichtbaren Lichtes keine Eigenabsorption aufweisen, d. h. sie müssen farblos sein.

In keiner der bisher bekannten Reihen von Verbindungen mit flüssigkristalliner Mesophase gibt es eine Einzelverbindung, die allen diesen Erfordernissen entspricht. Es werden daher in der Regel Mischungen von zwei bis zwanzig, vorzugsweise drei bis fünfzehn, Verbindungen hergestellt, um als flüssigkristalline Phasen verwendbare Substanzen zu erhalten. Hierzu mischt man gewöhnlich mindestens eine Verbindung mit niedrigem Schmelz- und Klärpunkt. Hierbei wird normalerweise ein Gemisch erhalten, dessen Schmelzpunkt unter dem der niedriger schmelzenden Komponente liegt, während der Klärpunkt zwischen den Klärpunkten der Komponenten liegt. Optimale Phasen lassen sich jedoch auf diese Weise nicht leicht herstellen, da die Komponenten mit den hohen Schmelz- und Klärpunkten den Gemischen häufig auch eine hohe Viskosität verleihen. Dadurch werden die Schaltzeiten der damit hergestellten elektrooptischen Anzeigeelemente in unerwünschter Weise verlängert.

Der Erfindung liegt die Aufgabe zugrunde, flüssikristalline Phasen herzustellen, die eine nematische Phase im geforderten Temperaturbereich aufweisen und in Flüssigkristallzellen bei Raumtemperatur ausreichend kurze Schaltzeiten ermöglichen.

Es ist bereits eine große Anzahl flüssigkristalliner Phasen auf der Basis einer Vielzahl von Verbindungen im Handel. Es besteht jedoch immer noch ein großer Bedarf nach flüssigkristallinen Phasen mit hohen Klärpunkten, niederen Schmelzpunkten, niedriger Viskosität (und damit kurzen Schaltzeiten) und kleiner optischer Anisotropie. Insbesondere für die sogenannten Guest-Host-Displays mit positivem Kontrast (die Information erscheint dunkel auf hellem Hintergrund) sind flüssigkristalline Phasen mit breitem Mesophasenbereich, niedriger Viskosität, kleiner optischer Anisotropie, steiler Transmissionskennlinie und relativ stark negativer dielektrischer Anisotropie erforderlich (T. J. Scheffer, Phil. Trans. R. Soc. Lond. A 309 (1983) 189 ; F. Gharadjedazki und R. Voumasd, J. Appl. Phys. 53 (1982) 7306). Die Flüssigkristallphasen müssen darüber hinaus eine hohe UV-Stabilität besitzen und die dichroitischen Farbstoffe in ausreichendem Maße aufnehmen. Derartige negative FK-Phasen standen bisher nicht zur Verfügung. Bei Breitbereichsmischungen z. B. für Außenanwendungen muß das Produkt aus Schichtdicke und optischer Anisotropie ganz bestimmte Werte haben, z. B. etwa 1,0 oder etwa 0,5, da sonst die Winkelabhängigkeit des Kontrastes zu groß wird und Interferenzfaben auftreten, die das optische Erscheinungsbild beeinträchtigen. Für derartige TN-Zellen wird heute allgemein zur Erzielung besonders guter Winkelabhängigkeit des Kontrastes eine Schichtdicke von etwa 6-7 Mikrometern und eine Flüssigkristallphase mit positiver dielektrischer Anisotropie und einer optischen Anisotropie von etwa + 0,07 bis etwa + 0,08 eingesetzt. Insbesondere schwierig ist das Erreichen von ausreichend hohen Klärpunkten bei gleichzeitigem Vermeiden des Auftretens smektischer Phasen und zu hohen Viskositätswerten bei tiefen Temperaturen. Derartige positive FK-Phasen standen bisher nicht zur Verfügung.

Es wurde nun gefunden, daß Flüssigkristallphasen mit besonders günstigen Kombinationen von Materialeigenschaften, insbesondere breiten Mesophasenbereichen und kleiner optischer Anisotropie erhalten werden, wenn sie mindestens eine Komponente aus der Gruppe A, bestehend aus den Verbindungen der Formeln I bis IV

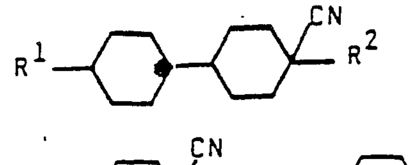

(I)

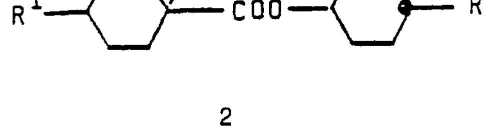

(II)

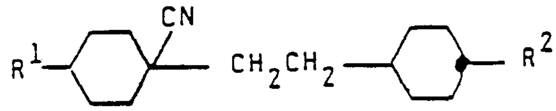 (III)

worin $R^1$ und $R^2$ jeweils R,

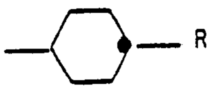 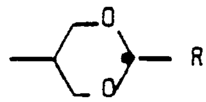 oder 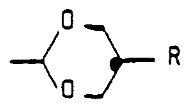 und

R Alkyl mit 1 bis 12 C-Atomen, worin auch eine oder zwei nicht benachbarte $CH_2$-Gruppen durch —O—, —CO—, —O—CO— oder —CO—O ersetzt sein können, bedeuten,

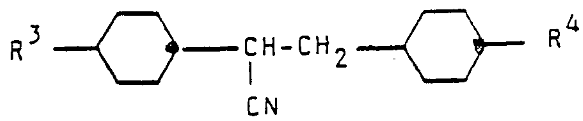 (IV)

worin $R^3$ und $R^4$ jeweils R oder

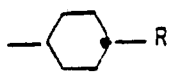

bedeuten und R die oben angegebene Bedeutung hat,
und/oder mindestens eine Komponente ausgewählt aus der Gruppe B bestehend aus den Verbindungen der Formeln V und VI

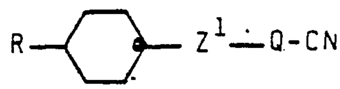 (V)

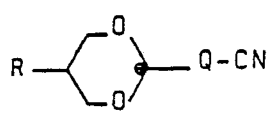 (VI)

worin R die oben angegebene Bedeutung hat, Q

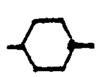 oder 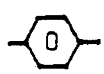

ist, und $Z^1$

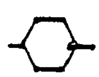

eine Einfachbindung, —$CH_2CH_2$—, —CO—O— oder —O—CO— bedeutet,
und mindestens eine Komponente ausgewählt aus der Gruppe C bestehend aus den Verbindungen der Formeln VII bis X

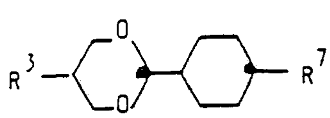 (VII)

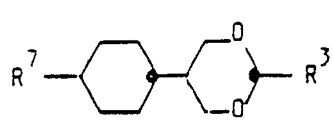 (VIII)

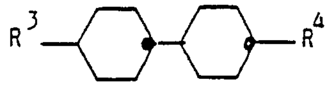 (IX)

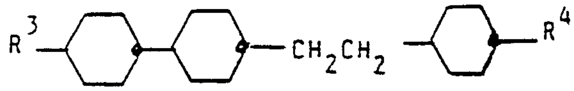 (X)

worin $R^3$ und $R^4$ die oben angegebene Bedeutung haben und $R^7$ die Bedeutung von

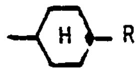

oder $R^8$ annehmen kann, wobei R wie angegeben definiert ist, und $R^8$ Alkyl mit 1 bis 12 C-Atomen, worin auch eine oder zwei nicht benachbarte $CH_2$-Gruppen durch —O— oder —CO— ersetzt sein können, bedeutet,

und gegebenenfalls eine oder mehrere Komponenten ausgewählt aus der Gruppe D bestehend aus den Verbindungen der Formeln XI bis XIII

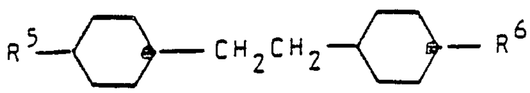 (XI)

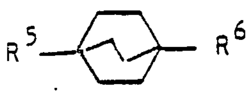 (XII)

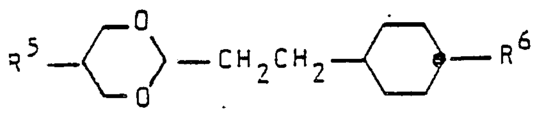 (XIII)

worin $R^5$ und $R^6$ jeweils unabhängig voneinander Alkyl mit 1 bis 12 C-Atomen, worin auch eine oder zwei nicht benachbarte $CH_2$-Gruppen durch —O—, —CO—, —O—CO— oder —CO—O ersetzt sein können, bedeuten,

und gegebenenfalls eine oder mehrere Komponenten ausgewählt aus der Gruppe E bestehend aus den Verbindungen der Formeln XIV und XV

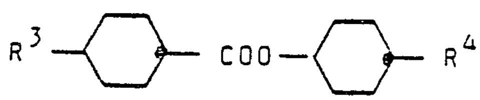 (XIV)

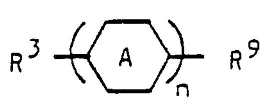 (XV)

worin

$R^3$ und $R^4$ jeweils R oder

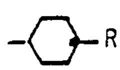

$R^9$ R,

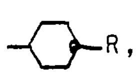 , 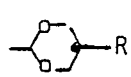

oder, im Falle n = 2, auch CN,

n 2 oder, im Falle $R^3$ =

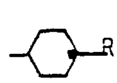

auch 1, und

A eine gegebenenfalls in 2- oder 3-Position fluorierte 1,4-Phenylengruppe bedeutet,

enthält, mit der Maßgabe, daß die Flüssigkristall-Phase bei Anwesenheit von Verbindungen der Formel V und/oder VI, worin Q 1,4-Phenylen bedeutet, mindestens eine Komponente der Formel IX, worin $R^3$ n-Alkyl und $R^4$ n-Alkyl, n-Alkoxy oder n-Alkanoyloxy mit jeweils 1-12 C-Atomen bedeutet, und mindestens eine Komponente aus der Gruppe E enthält.

Gegenstand der Erfindung sind somit die oben beschriebenen Flüssigkristallphasen, die gegebenenfalls auch zwei oder mehr pleochroitische Farbstoffe enthalten können, sowie die Verwendung dieser Phasen in Flüssigkristallanzeigeelementer.

Ferner sind Gegenstand der Erfindung Flüssigkristallanzeigeelemente, die solche Phasen enthalten.

Aus der DE-OS 30 22 818 sind zwar bereits interferenzfarbenfreie FK-Anzeigeelemente bekannt, die Dielektrika mit positiver dielektrischer Anisotropie und niedriger optischer Anisotropie, vorzugsweise im Bereich von 0,05 bis 0,10 enthalten. Die dort beschriebenen FK-Phasen ermöglichen jedoch nicht einen Arbeitstemperaturbereich, der Außenanwendungen zuläßt. Überraschenderweise zeigt sich nun, daß mit den erfindungsgemäßen positiven FK-Phasen ein genügend breiter Arbeitstemperaturbereich, insbesondere auch für Außenanwendungen, möglich ist, wobei gleichzeitig bei tiefen Temperaturen das Auftreten smektischer Phasen und/oder sehr hohen Viskositätswerten weitgehend ausgeschaltet wird.

Die erfindungsgemäßen negativen flüssigkristallinen Guest-Host-Systeme zeichnen sich insbesondere durch eine kleine optische Anisotropie, ausgezeichnete Stabilität und hohe Ordnungsgrade der Farbstoffe aus. Mit der Bereitstellung der erfindungsgemäßen flüssigkristallinen Guest-Host-Systeme wird außerdem unter verschiedenen anwendungstechnischen Gesichtspunkten die Anwendbarkeit solcher Systeme erheblich verbreitert. Die erfindungsgemäßen flüssigkristallinen Guest-Host-Systeme und diese enthaltende elektrooptische Anzeigeelemente können in Abhängigkeit von der Auswahl der Komponenten des Host-Materials und der pleochroitischen Farbstoffe für die verschiedensten Anwendungen bereitgestellt werden.

Die erfindungsgemäßen negativen FK-Guest-Host-Systeme enthalten weiterhin mindestens zwei, bevorzugt 2 bis 5, insbesondere 3 bis 4, pleochroitische Farbstoffe. Prinzipiell können als Farbstoffe alle für Guest-Host-Mischungen geeigneten pleochroitischen Farbstoffe verwendet werden. Die wichtigsten dieser Farbstoffe gehören den Klassen der Anthrachinon-, Naphthochinon-, Azo-, Indigo-, und/oder Perylen-Farbstoffe an.

Diese sind in reicher Vielfalt in der Literatur beschrieben. Der Fachmann kann sich die für den jeweiligen Anwendungszweck am besten geeigneten Farbstoffe ohne Schwierigkeiten heraussuchen. So sind z. B. Anthrachinonfarbstoffe beschrieben in EP 34 832, EP 44 893, EP 48 583, EP 54 217, EP 56 492, EP 59 036, GB 20 65 158, GB 20 65 695, GB 20 81 736, GB 20 82 196, GB 20 94 822, GB 20 94 825, JP-OS 55-123673, JP-OS 56-112 967, JP-OS 57-165 456, JP-OS 59-020 355, DE 30 17 877, DE 30 40 102, DE 30 48 552, DE 31 00 533, DE 31 15 147, DE 31 15 762, DE 31 50 803, DE 32 01 120 und DE 33 09 045, Naphthochinonfarbstoffe beschrieben in DE 31 26 108 und 32 02 761, Azofarbstoffe in EP 43 904, DE 31 23 519, DE 32 38 702 (blaue Tetraazofarbstoffe), DE 32 45 751, DE 33 09 048, PCT WO 82/2054, GB 20 79 770, JP-OS 56-57 850, JP-OS 56-104 984, JP-OS 55-052 375, JP-OS 59-096 171, JP-OS 59-093 776, US 4,308,161, US 4,308,162, US 4,340,973, T. Uchida, C. Shishido, H ? Seki und M. Wada : Mol. Cryst. Liq. Cryst. 39, 39-52 (1977) und H. Seki, C. Shishido, S. Yasui und T. Uchida : Jpn. J. Appl. Phys. 21, 191-192 (1982) und Perylene beschrieben in EP 60 895, EP 68 427 und PCT WO 82/1191. Nachfolgend sind aus diesen Farbstoffklassen einige Gruppen noch detaillierter angegeben :

a) Anthrachinonfarbstoffe mit S-Alkyl-, S-Cycloalkyl- und/oder S-Aryl-Gruppen, beispielsweise der Formel II'

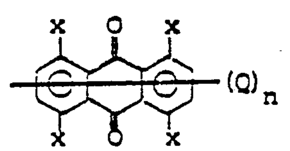

(II')

worin

Q $NH_2$, OH, Alkyl, Aryl, $NO_2$ oder Halogen und

n 0, 1, 2, 3 oder 4 bedeutet,

X jeweils H, SR, $NZ_1Z_2$ oder Q,

R jeweils Alkyl, Aryl oder Cycloalkyl und

$Z_1$ und $Z_2$ jeweils H, Alkyl, Aryl oder Cycloalkyl bedeutet (bekannt sind derartige Farbstoffe z. B. aus EP 0 059 036), und

b) Anthrachinonfarbstoffe mit substituierten Phenyl und/oder Cyclohexylgruppen, beispielsweise der Formel III'

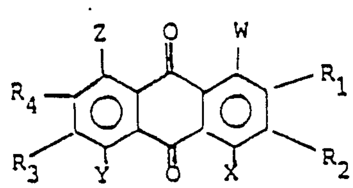

(III')

worin W, X, Y, und Z Wasserstoff, $NH_2$, OH, $NHCH_3$ oder $NHC_2H_5$ bedeuten und einer oder zwei der Reste $R_1$, $R_2$, $R_3$ und $R_4$ eine Gruppe der Teilformeln

—Ph—R, —Ph—OR, —Cy—R, —Ph—Cy—R oder —Cy—Cy—R

und die anderen Wasserstoff bedeuten, wobei R eine Alkylgruppe mit 1-12 Kohlenstoffatomen ist (bekannt sind derartige Farbstoffe z. B. aus DE 30 40 102) und

c) Naphthochinonfarbstoffe, beispielsweise der Formel IV'

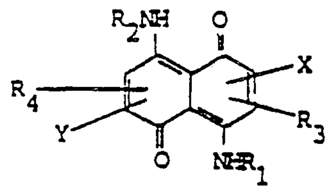

(IV')

worin

X und Y gleich oder verschieden sind und Wasserstoff, Chlor oder Brom,

$R_1$, $R_2$, $R_3$ und $R_4$ Wasserstoff, Alkyl oder Alkoxyalkyl mit bis zu 8 C-Atomen oder eine zyklische Gruppe Z,

Z —Ph—R, —Ph—Ph—R,
—Cy—R, —Cy—Cy—R,
—Ph—Cy—R oder —Cy—Ph—R und

R Alkyl, Alkoxy, Alkoxyalkyl, Alkoxyalkoxy oder Alkanoyloxy mit bis zu 8 C-Atomen bedeuten (bekannt sind derartige Farbstoffe z. B. aus DE 31 26 108), und

d) Azofarbstoffe, beispielsweise der Formel V'

$$R_1—Ph_1—(N{=}N—Ph_{1+n}—)_n—N{=}N—Ph_{2+n}—R_2 \qquad (V')$$

worin

$R_1$ Alkyl oder Alkylsulfonyl,

$R_2$ Dialkylamino, Monoalkylamino oder eine 5- oder 6-gliedrige Cycloalkylaminogruppe und

n 1, 2 oder 3 ist,

wobei an die Benzolringe unter Bildung von Naphthalinstrukturen ein zweiter Benzolring kondensiert sein kann (bekannt sind derartige Farbstoffe z. B. aus US 4,340,973) und/oder

e) Azofarbstoffe, beispielsweise der Formel VI'

$$R_1—Ph_1—(N{=}N—Ph_{1+n}—)_n—N{=}N—Ph_{2+n}—OR_2 \qquad (VI')$$

worin

$R_1$ Alkyl

$R_2$ Alkyl, Alkylcarbonyl, Arylcarbonyl oder Alkyloxycarbonyl und

n 1, 2, 3 oder 4 ist,

wobei an die Benzolringe unter Bildung von Naphthalinstrukturen ein zweiter Benzolring kondensiert sein kann (bekannt sind derartige Farbstoffe z. B. aus JP-OS 56-104 984) verwendet.

Durch geeignete Wahl der Farbstoffkomponenten und der relativen Farbstoffkonzentrationen können die erfindungsgemäßen Guest-Host-Systeme den verschiedensten Anwendungsbereichen angepaßt werden.

Die erfindungsgemäßen Guest-Host-Systeme enthalten in der Regel 0,1 bis 15, vorzugsweise 0,5 bis 10, insbesondere 1 bis 7 Gewichtsprozent pleochroitische Farbstoffe.

Vorzugsweise werden die pleochroitischen Farbstoffe des erfindungsgemäßen Guest-Host-Systems so gewählt, daß sie einen geeigneten Teil des sichtbaren Spektrums abdecken und daß die Absorption in diesem Bereich mehr oder weniger konstant ist.

Die Herstellung der erfindungsgemäßen Guest-Host-Systeme erfolgt in an sich üblicher Weise. In der Regel werden die gewünschten Mengen der verschiedenen pleochroitischen Farbstoffe im Host-Material gelöst, zweckmäßig bei erhöhter Temperatur.

Es ist jedoch auch möglich, Lösungen des pleochroitischen Farbstoffes und des Host-Materials in einem geeigneten organischen Lösungsmittel, zum Beispiel Aceton, Chloroform oder Methanol, zu mischen und das Lösungsmittel nach gründlicher Durchmischung wieder zu entfernen, beispielsweise durch Destillation unter vermindertem Druck. Selbstverständlich muß bei dieser Verfahrensweise darauf geachtet werden, daß durch das Lösungsmittel keine Verunreinigungen oder unerwünschten Dotierungsstoffe eingeschleppt werden.

Die einzelnen Verbindungen der Formeln I-XV der erfindungsgemäßen Flüssigkristallphasen sind

entweder bekannt oder ihre Herstellungsweisen sind für den einschlägigen Fachmann aus dem Stand der Technik ohne weiteres abzuleiten, da sie auf in der Literatur beschriebenen Standardverfahren basieren.

Entsprechende Verbindungen werden beispielsweise in der DE-OS 32 31 707, DE-OS 33 21 373, DE-OS 27 02 598, DE-OS 29 48 836, US 4,323,473, US 4,325,830, US 4,322,354, DE-OS 33 20 024, DE-OS 33 32 691, DE-OS 33 28 638, DE-OS 31 00 142, DE-OS 24 29 093, DE-OS 29 44 905, DE-OS 32 27 916, DE-OS 32 06 269, DE-OS 29 33 611, DE-OS 28 00 553, DE-OS 26 36 684, DE-OS 29 27 277, DE-OS 31 17 152 und DE-OS 30 42 391 beschrieben.

Überraschenderweise zeige sich, daß die Verbindungen VII bis X besonders vorteilhaft als Komponenten der erfindungsgemäßen positiven und negativen Phasen verwendbar sind, die breite nematische Bereiche und keine oder nur wenig störende smektische Phasenbereiche aufweisen.

Die erfindungsgemäßen negativen FK-Phasen enthalten vorzugsweise 20 bis 90, insbesondere 55 bis 85 % von Verbindungen aus der Gruppe A. Vorzugsweise enthalten sie mindestens zwei, insbesondere zwei bis zehn, besonders bevorzugt drei bis sechs verschiedene Verbindungen aus der Gruppe A sowie keine Verbindungen aus der Gruppe B.

Weiterhin bevorzugt sind die erfindungsgemäßen negativen FK-Phasen mit mindestens einer, vorzugsweise zwei bis vier, Verbindung(en) der Formel XIV.

Die erfindungsgemäßen positiven FK-Phasen enthalten vorzugsweise 15 bis 60, insbesondere 22 bis 45 % von Verbindungen aus der Gruppe B. Vorzugsweise enthalten sie nur solche Verbindungen aus der Gruppe B, worin Q jeweils 1,4-Phenylen oder 1,4-Cyclohexylen bedeutet. Es sind jedoch auch FK-Phasen von Interesse, worin mehrere Verbindungen der Gruppe B enthalten sind, worin Q teilweise 1,4-Phenylen und teilweise 1,4-Cyclohexylen bedeutet.

Bevorzugte Komponenten ausgewählt aus der Gruppe B sind diejenigen der Formeln Va bis Vd, VIa und VIb :

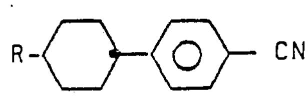

(Va)

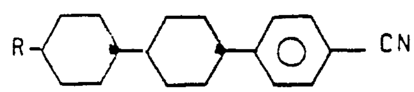

(Vb)

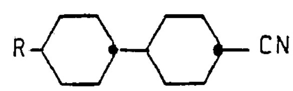

(Vc)

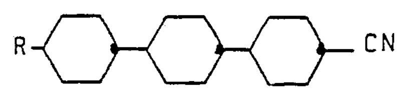

(Vd)

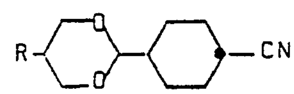

(VIa)

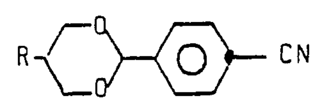

(VIb)

Darunter sind diejenigen der Teilformeln Va, Vb, Vd und VIa besonders bevorzugt.

Ferner bevorzugt sind Verbindungen der Formel V, worin $Z^1$ $-CH_2CH_2-$ oder eine Einfachbindung und Q trans-1,4-Cyclohexylen bedeutet.

Vorzugsweise enthalten die erfindungsgemäßen positiven FK-Phasen mindestens zwei, insbesondere mindestens drei, Verbindungen aus der Gruppe B. Weiterhin bevorzugt sind erfindungsgemäße positive FK-Phasen mit mindestens einer, vorzugsweise zwei bis sechs, insbesondere vier bis sechs, Verbindung(en) der Formel XIV und/oder mindestens einer, vorzugsweise zwei bis vier, Verbindung(en) der Formel XV.

Von den erfindungsgemäßen positiven oder negativen flüssigkristallinen Phasen sind insbesondere jene bevorzugt, die mindestens drei Komponenten, ausgewählt aus der Gruppe A oder B, und mindestens eine Komponente, ausgewählt aus der Gruppe C, enthalten. Weiterhin sind solche erfindungsgemäßen Phasen bevorzugt, die mindestens drei Komponenten aus der Gruppe A oder B und mindestens eine Komponente aus der Gruppe D enthalten.

Die erfindungsgemäßen Phasen enthaltend Verbindungen aus der Gruppe C, insbesondere solche der Formel IXb, zeichnen sich durch besonders kurze Schaltzeiten, insbesondere bei tiefen Temperaturen, aus.

Bevorzugte FK-Phasen enthalten nicht gleichzeitig Verbindungen der Formel VI und VII.

Bevorzugte Verbindungen aus der Gruppe C sind diejenigen der Formel VII und IX. Besonders bevorzugt sind Verbindungen der Formel IX, worin $R^3$ geradkettiges Alkyl mit 1 bis 12 C-Atomen bedeutet, worin auch eine $CH_2$-Gruppe durch —O—, —CO—, —O—CO— oder —CO—O— ersetzt sein kann, und $R^4$ geradkettiges Alkyl mit 1 bis 12 C-Atomen, insbesondere n-Propyl oder n-Pentyl, oder

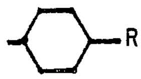

mit R = n-Alkyl mit 1-12 C-Atomen, insbesondere mit 2 bis 7 C-Atomen, bedeutet. $R^3$ ist hier besonders bevorzugt n-Alkyl, n-Alkoxyalkyl, n-Alkoxy oder n-Alkanoyloxy mit jeweils 2 bis 7 C-Atomen. Besonders bevorzugte Bedeutungen von $R^3$ sind hier insbesondere Methoxy, Ethoxy, n-Butoxy, n-Hexoxy, n-Hexanoyloxy, n-Butyryloxy und Formyloxy.

Bevorzugte erfindungsgemäße FK-Phasen enthalten mindestens zwei, insbesondere mindestens drei, Komponenten ausgewählt aus der Gruppe der Formeln IXa bis IXl :

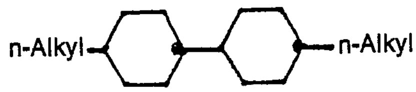 (IXa)

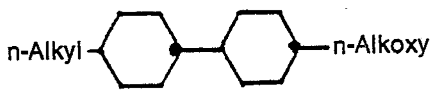 (IXb)

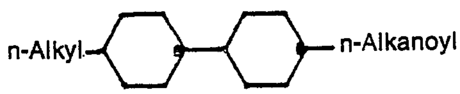 (IXc)

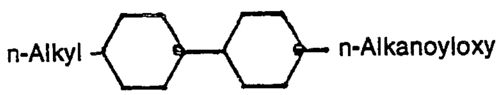 (IXd)

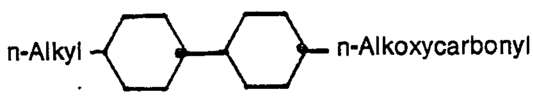 (IXe)

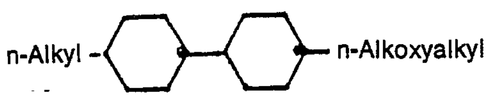 (IXf)

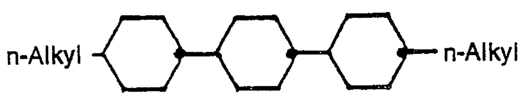 (IXg)

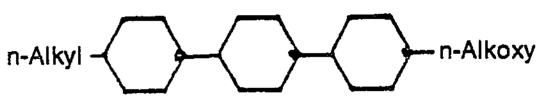 (IXh)

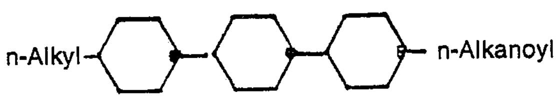 (IXi)

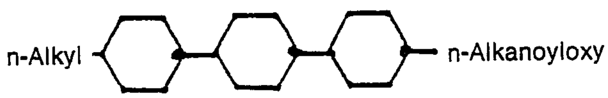 (IXj)

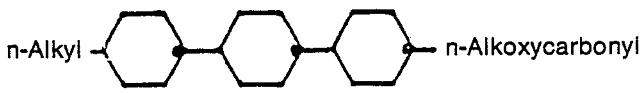

(IXk)

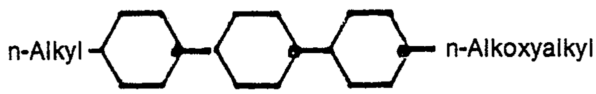

(IXl)

Unter den Verbindungen der Formeln IXa bis IXl sind diejenigen der Formeln IXa, IXb, IXd, IXg, IXh und IXj besonders bevorzugt.

Besonders bevorzugt sind FK-Mischungen enthaltend gleichzeitig jeweils mindestens eine Komponente der Formeln IXa, IXb und IXd.

Weiterhin bevorzugt sind FK-Mischungen enthaltend jeweils mindestens eine Komponente der Formeln IXb und IXd sowie FK-Mischungen, welche lediglich Komponenten der Formel IXb enthalten. Ferner bevorzugt sind FK-Mischunger, welche neben mindestens einer Komponente ausgewählt aus den Formeln IXa bis IXf mindestens eine weitere Komponente ausgewählt aus den Formeln IXg bis IXl, insbesondere IXg, IXh, IXi und/oder IXj, enthalten.

Weiterhin bevorzugt sind erfindungsgemäße FK-Mischungen enthaltend mindestens eine, vorzugsweise mindestens zwei, Verbindungen der Formel X, worin $R^3$ und $R^4$ jeweils unabhängig voneinander vorzugsweise n-Alkyl mit 2 bis 7 C-Atomen bedeuten.

In den Verbindungen der Formeln V und VI ist R vorzugsweise n-Alkyl oder n-Alkoxyalkyl mit jeweils 2 bis 9 C-Atomen. $Z^1$ in Formel V ist vorzugsweise trans-1,4-Cyclohexylen oder eine Einfachbindung, insbesondere eine Einfachbindung.

Besonders günstige Eigenschaften zeigen solche erfindungsgemäße flüssigkristalline Phasen, in denen die Summe der Gewichtsanteile der Komponente(n) der Formel XV und der Komponente(n) der Formeln V und/oder VI, worin Q jeweils 1,4-Phenylen bedeutet, $\leq$ 50 %, insbesondere $\leq$ 40 % ist und/oder im Bereich von 5 bis 50 %, insbesondere im Bereich von 13 bis 35 %, liegt.

Von den Verbindungen der Komponenten I, II, III und IV aus der Gruppe A sind jene bevorzugt, in denen $R^1$ und $R^2$ gleichzeitig R sind, wobei R Alkyl mit 1-12 C-Atomen, worin auch eine oder zwei nicht benachbarte $CH_2$-Gruppen durch —O—, —CO—, —O—CO oder —CO—O— ersetzt sein können, bedeutet. Weiterhin sind solche Verbindungen der Komponenten I bis IV bevorzugt, in denen $R^1$ und $R^2$ beide wahlweise, aber nicht gleichzeitig, R oder

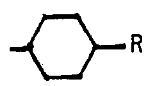

bedeuten.

Unter den bevorzugten Verbindungen VII und VIII aus der Gruppe C sind solche aufzuzählen, in denen $R^3$ R und $R^7$ $R^8$ (mit den angegebenen Bedeutungen) ist oder aber beide wahlweise, aber nicht gleichzeitig $R^3$ bzw. $R^8$ oder

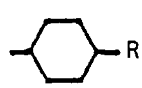

bedeuten. Unter den Flügelgruppen $R^8$ sind weiterhin solche bevorzugt, in denen $R^8$ Alkyl mit 1 bis 12 C-Atomen bedeutet.

Von den Verbindungen der Komponente IX sind solche bevorzugt, in denen $R^3$ stets die definierte Bedeutung von R hat und $R^4$ wahlweise R, OR, —O—COR, —OOOR und —$CH_2$OR ist.

Bevorzugte erfindungsgemäße Phasen enthalten 12 bis 70 %, insbesondere 18 bis 55 %, von Verbindungen aus der Gruppe C.

Unter den Verbindungen der Komponente X sind vorzugsweise jene zu nennen, in denen $R^3$ und $R^4$ entweder nebeneinander die Bedeutung von R haben oder aber $R^3$ die Bedeutung von R hat und $R^4$

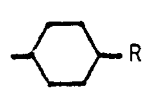

bedeutet.

Von den Verbindungen der Komponente XI, XII und XIII aus der Gruppe D sind alle jene bevorzugt, in denen $R^5$ und $R^6$ nebeneinander die angegebene Bedeutung von R, insbesondere n-Alkyl mit 2 bis 7 C-Atomen, haben. Aus der fakultativen Gruppe E sind jene Verbindungen der Formel XIV bevorzugt, in

denen $R^3$ und $R^4$ entweder nebeneinander R bedeuten oder aber beide wahlweise, aber nicht gleichzeitig, die Bedeutung von R oder

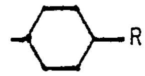

annehmen können und R jeweils unabhängig voneinander eine n-Alkylgruppe mit 2 bis 7 C-Atomen ist.

Von den zahlreichen stets phenylhaltigen Verbindungen der Formel XV sind diejenigen der Formeln XVa bis XVl besonders bevorzugt :

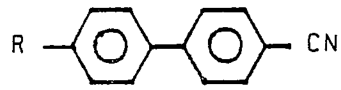

(XVa)

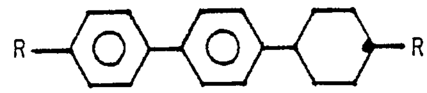

(XVb)

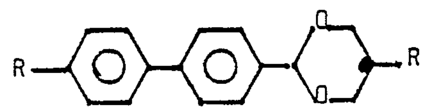

(XVc)

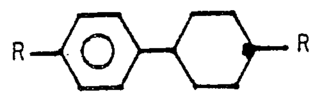

(XVd)

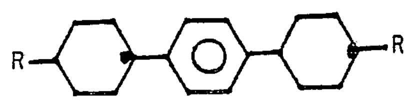

(XVe)

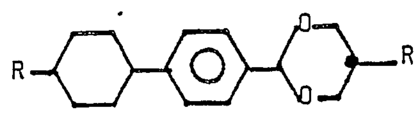

(XVf)

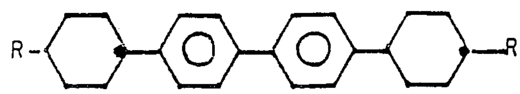

(XVg)

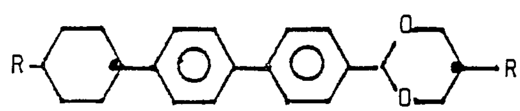

(XVh)

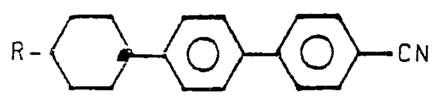

(XVi)

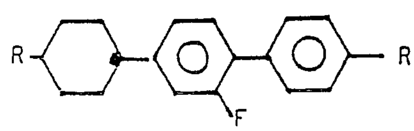

(XVj)

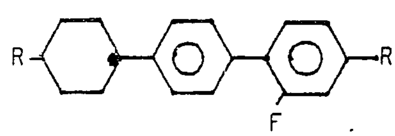

(XVk)

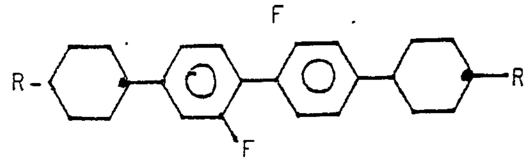

(XVl)

In diesen Formeln bedeuten R, die jeweils gleich oder verschieden sein können, vorzugsweise n-Alkyl oder n-Alkoxy mit jeweils 2 bis 7 C-Atomen. Besonders bevorzugt sind Verbindungen der Formeln XVb, XVd (insbesondere solche, worin beide R jeweils n-Alkyl oder ein R n-Alkyl und das andere n-Alkoxy bedeutet), XVg, XVi und XVl.

R bedeutet in allen Verbindungen aus den Gruppen A bis E vorzugsweise Alkyl, —O-Alkyl, —O—CO-Alkyl, —COO-Alkyl oder Oxaalkyl, worin Alkyl 1-12 C-Atome, vorzugsweise 2-10 und insbesondere 3-9 C-Atome enthält.

$R^8$ bedeutet in den Verbindungen VII und VIII aus der Gruppe C Alkyl, —O-Alkyl oder Oxaalkyl, worin Alkyl 1-12 C-Atome, vorzugsweise 2-10 und insbesondere 3-9 C-Atome enthält.

Verbindungen, worin R Alkyl, —O-Alkyl und —O—CO-Alkyl bedeuten, werden für die erfindungsgemäßen flüssigkristallinen Phasen bevorzugt verwendet.

Werterhin sind solche Verbindungen, die zwei Reste R enthalten, besonders bevorzugt, in denen ein Rest R Alkyl, der andere Alkyl, Alkoxy oder Alkanoyloxy bedeutet.

Wenn die Alkylgruppen 3 oder mehr Kohlenstoffatome enthalten, können diese in gerader oder verzweigter Kette angeordnet sein. In den erfindungsgemäßen Phasen werden jedoch keine Komponenten verwendet, die mehr als eine verzweigte Alkylgruppe enthalten. Derartige verzweigte Alkylgruppen enthalten im Rahmen der vorliegenden Erfindung nicht mehr als eine Kettenverzweigung ; vorzugsweise handelt es sich dabei um eine Methyl- oder Ethylgruppe in 1- oder 2-Stellung des Kohlenstoffgerüstes, so daß als verzweigte Alkylgruppen insbesondere in Frage kommen : 2-Methylpropyl, 2-Methylbutyl, 1-Methylpentyl, 2-Methylpentyl, 1-Methylhexyl. In der Regel enthalten die erfindungsgemäßen flüssigkristallinen Dielektrika nur eine Komponente mit einem verzweigtkettigen Alkylrest, um gewünschtenfalls optische Aktivität zu induzieren. Zu diesem Zweck werden normalerweise nicht mehr als 10 Gewichtsprozent, vorzugsweise 0,5 bis 3 Gewichtsprozent einer Komponente mit einem verzweigten Alkylrest zugefügt. Im übrigen werden als Komponenten der erfindungsgemäßen Phase solche Verbindungen der Formeln (I) bis (XV) bevorzugt verwendet, in denen die Alkylreste geradkettig sind, also Methyl, Ethyl, n-Propyl, n-Butyl, n-Pentyl, n-Hexyl, n-Heptyl, n-Octyl, n-Nonyl, n-Decyl, n-Undecyl und n-Dodecyl bedeuten.

Die Herstellung der erfindungsgemäßen Phasen erfolgt in an sich üblicher Weise. In der Regel wird die gewünschte Menge der in geringerer Menge verwendeten Komponenten in der den Hauptbestandteil ausmachenden Komponenten gelöst, zweckmäßig bei erhöhter Temperatur. Wenn dabei eine Temperatur oberhalb des Klärpunkts des Hauptbestandteils gewählt wird, kann die Vollständigkeit des Lösevorgangs besonders leicht beobachtet werden.

Es ist jedoch auch möglich, Lösungen der Komponenten in einem geeigneten organischen Lösungsmittel, zum Beispiel Aceton, Chloroform oder Methanol, zu mischen und das Lösungsmittel nach gründlicher Durchmischung wieder zu entfernen, beispielsweise durch Destillation unter vermindertem Druck. Selbstverständlich muß bei dieser Verfahrensweise darauf geachtet werden, daß durch das Lösungsmittel keine Verunreinigungen oder unerwünschten Dotierungsstoffe eingeschleppt werden.

Durch geeignete Zusätze können die flüssigkristallinen Phasen nach der Erfindung so modifiziert werden, daß sie in allen bisher bekannt gewordenen Arten von Flüssigkristallanzeigeelementen verwendet werden können.

Derartige Zusätze sind dem Fachmann bekannt und in der Literatur ausführlich beschrieben. Beispielsweise können Leitsalze, vorzugsweise Ethyl-dimethyl-dodecyl-ammonium-4-hexyloxybenzoat, Tetrabutylammonium-tetraphenylboranat oder Komplexsalze von Konenethern (vgl. z. B. I. Haller et al., Mol. Cryst. Liq ? Cryst. Band 24, Seiten 249-258, (1973)) zur Verbesserung der Leitfähigkeit oder Substanzen zur Veränderung der dielektrischen Anisotropie, der Viskosität und/oder der Orientierung der nematischen Phasen zugesetzt werden. Derartige Substanzen sind z. B. in den DE-OS 22 09 127, 22 40 864, 23 21 632, 23 38 281, 24 50 088, 26 37 430, 28 53 728 und 29 02 177 beschrieben.

Die folgenden Beispiele sollen die Erfindung erläutern, ohne sie zu begrenzen. In den Beispielen sind Schmelzpunkt und Klärpunkt einer flüssigkristallinen Substanz in Grad Celsius angegeben. Die Prozentzahlen beziehen sich auf Gewichtsprozente.

### Beispiel 1

Eine flüssigkristalline Phase aus

34,0 % r-1-Cyan-cis-4-(trans-4-butylcyclohexyl)-1-heptylcyclohexan,
29,0 % r-1-Cyan-cis-4-(trans-4-pentylcyclohexyl)-1-pentylcyclohexan,
10,8 % trans, trans-4-Propyl-4'-methoxycyclohexylcyclohexan,
9,7 % trans, trans-4-Propyl-4'-ethoxycyclohexylcyclohexan,
3,9 % trans, trans-4-Butylcyclohexylcyclohexan-4'-carbonsäure-trans-4-propylcyclohexylester,
3,9 % trans, trans-4-Butylcyclohexylcyclohexan-4'-carbonsäure-trans-4-pentylcyclohexylester,
4,8 % trans, trans-4-Propylcyclohexylcyclohexan-4'-carbonsäure-trans-4-propylcyclohexylester
und
3,9 % trans, trans-4-Propylcyclohexylcyclohexan-4'-carbonsäure-trans-4-pentylcyclohexylester

hat einen Schmelzpunkt von — 10°, einen Klärpunkt von 70° und eine optische Anisotropie von + 0,03.

Beispiel 2

Eine flüssigkristalline Phase aus

34,0 % r-1-Cyan-cis-4-(trans-4-butylcyclohexyl)-1-heptylcyclohexan,
29,0 % r-1-Cyan-cis-4-(trans-4-pentylcyclohexyl)-1-pentylcyclohexan,
10,8 % trans, trans-4-Propyl-4'-methoxycyclohexylcyclohexan,
9,7 % trans, trans-4-Propyl-4'-ethoxycyclohexylcyclohexan,
3,9 % trans, trans-4-Butylcyclohexylcyclohexan-4'-carbonsäure-trans-4-propylcyclohexylester,
3,9 % trans, trans-4-Butylcyclohexylcyclohexan-4'-carbonsäure-trans-4-pentylcyclohexylester,
4,8 % trans, trans-4-Propylcyclohexylcyclohexan-4'-carbonsäure-trans-4-propylcyclohexylester
und
3,9 % r-1-Cyan-cis-4-(trans-4-pentylcyclohexyl)-1-(trans-4-propylcyclohexyl)-cyclohexan

hat einen Klärpunkt von 72° und eine optische Anisotropie von + 0,03.

Beispiel 3

Eine flüssigkristalline Phase aus

34,0 % r-1-Cyan-cis-4-(trans-4-butylcyclohexyl)-1-heptylcyclohexan,
29,0 % r-1-Cyan-cis-4-(trans-4-pentylcyclohexyl)-1-pentylcyclohexan,
10,8 % trans, trans-4-Propyl-4'-methoxycyclohexylcyclohexan,
9,7 % trans, trans-4-Propyl-4'-ethoxycyclohexylcyclohexan,
4,8 % r-1-Cyan-cis-4-(trans-4-propylcyclohexyl)-1-(trans-4-propylcyclohexyl)-cyclohexan,
3,9 % r-1-Cyan-cis-4-(trans-4-pentylcyclohexyl)-1-(trans-4-propylcyclohexyl)-cyclohexan,
3,9 % r-1-Cyan-cis-4-(trans-4-propylcyclohexyl)-1-(trans-4-butylcyclohexyl)-cyclohexan und
3,9 % r-1-Cyan-cis-4-(trans-4-pentylcyclohexyl)-1-(trans-4-butylcyclohexyl)-cyclohexan

hat einen Klärpunkt von 75° und eine optische Anisotropie von + 0,03.

Beispiel 4

Eine flüssigkristalline Phase aus

34 % r-1-Cyan-cis-4-(trans-4-butylcyclohexyl)-1-heptylcyclohexan,
29 % r-1-Cyan-cis-4-(trans-4-pentylcyclohexyl)-1-pentylcyclohexan,
7 % trans, trans-4'-Methoxycyclohexyl-4-propylcyclohexan,
5 % trans, trans-4'-Ethoxycyclohexyl-4-propylcyclohexan,
5 % trans, trans-4'-Propoxycyclohexyl-4-propylcyclohexan,
20 % 1-(trans-4-Propylcyclohexyl)-2-(trans-4-propylcyclohexyl)-ethan,

hat einen Schmelzpunkt von —5,2°, einen Klärpunkt von 60,3° und eine optische Anisotropie von + 0,025.

Beispiel 5

Eine flüssigkristalline Phase aus

19 % trans, trans-4-Ethylcyclohexylcyclohexan-4'-carbonitril,
19 % trans, trans-4-Butylcyclohexylcyclohexan-4'-carbonitril,
7 % trans, trans-4-Propylcyclohexylcyclohexan-4'-carbonitril,
12 % trans, trans-4'-Propoxycyclohexyl-4-propylcyclohexan,
18 % trans, trans-4'-Methoxycyclohexyl-4-propylcyclohexan,
20 % trans, trans-4'-Propylcyclohexyl-4-butyryloxycyclohexan,
5 % trans, trans-4'-Propylcyclohexyl-4-valeryloxycyclohexan

hat einen Schmelzpunkt von —11,4°, einen Klärpunkt von 57,5° und eine optische Anisotropie von + 0,045.

Beispiel 6

Eine flüssigkristalline Phase aus

19 % trans, trans-4-Ethylcyclohexylcyclohexan-4'-carbonitril,

19 % trans, trans-4-Butylcyclohexylcyclohexan-4'-carbonitril,
15 % trans, trans-4'-Propoxycyclohexyl-4-propylcyclohexan,
5 % trans, trans-4'-Methoxycyclohexyl-4-propylcyclohexan,
17 % trans, trans-4'-Propylcyclohexyl-4-butyryloxycyclohexan,
20 % trans-4-Pentylcyclohexancarbonsäure-(trans-4-propylcyclohexylester)
5 % 4-(trans-4-Propylcyclohexyl)-4'-(trans-4-propylcyclohexyl)-biphenyl

hat einen Schmelzpunkt von —14,3°, einen Klärpunkt von 69,1° und eine optische Anisotropie von + 0,055.

Beispiel 7

Eine flüssigkristalline Phase aus

13 % trans, trans-4-Ethylcyclohexylcyclohexan-4'-carbonitril,
13 % trans, trans-4-Butylcyclohexylcyclohexan-4'-carbonitril,
5 % trans, trans-4-Pentylcyclohexylcyclohexan-4'-carbonitril,
15 % trans-4-Pentylcyclohexancarbonsäure-(trans-4-propylcyclohexylester),
13 % 4-(trans-4-Pentylcyclohexyl)-4'-(trans-4-propylcyclohexyl)-biphenyl,
25 % trans, trans-4'-Propoxycyclohexyl-4-propylcyclohexan,
7 % trans, trans-4'-Methoxycyclohexyl-4-propylcyclohexan,
9 % trans, trans-4'-Propylcyclohexyl-4-butyryloxycyclohexan

hat einen Schmelzpunkt von —10,4°, einen Klärpunkt von 81° und eine optische Anisotropie von + 0,065.

Beispiel 8

Eine Flüssigkristallphase, bestehend aus

6 % 2-p-Cyanphenyl-5-propyl-1,3-dioxan,
6 % 2-p-Cyanphenyl-5-butyl-1,3-dioxan,
15 % p-trans-4-Propylcyclohexyl-benzonitril,
9 % trans-4-Propylcyclohexancarbonsäure-(trans-4-propylcyclohexylester),
10 % trans-4-Pentylcyclohexancarbonsäure-(trans-4-propylcyclohexylester),
9 % trans, trans-4'-Propylcyclohexyl-4-butyryl-oxycyclohexan,
9 % trans, trans-4'-Propylcyclohexyl-4-hexanoyl-oxycyclohexan,
6 % trans, trans-4-Propylcyclohexyl-cyclohexan-4'-carbonsäure-trans-4-propylcyclohexylester,
6 % trans, trans-4-Propylcyclohexyl-cyclohexan-4'-carbonsäure-trans-4-pentylcyclohexylester,
6 % trans, trans-4-Butylcyclohexyl-cyclohexan-4'-carbonsäure-trans-4-propylcyclohexylester,
5 % trans, trans-4-Butylcyclohexyl-cyclohexan-4'-carbonsäure-trans-4-pentylcyclohexylester,
5 % 4-(trans-4-Propylcyclohexyl)-2'-fluor-4'-(trans-4-propylcyclohexyl)-biphenyl,
4 % 4-(trans-4-Pentylcyclohexyl)-2'-fluor-4'-(trans-4-propylcyclohexyl)-biphenyl,
4 % 4-(trans-4-Pentylcyclohexyl)-2'-fluor-4'-(trans-4-pentylcyclohexyl)-biphenyl,

hat einen Schmelzpunkt von —16.5° und einen Klärpunkt von + 96°.

Beispiel 9

Eine Flüssigkristallphase, bestehend aus

6 % 2-p-Cyanphenyl-5-propyl-1,3-dioxan,
6 % 2-p-Cyanphenyl-5-butyl-1,3-dioxan,
10 % p-trans-4-Propylcyclohexyl-benzonitril,
9 % trans-4-Propylcyclohexancarbonsäure-(trans-4-propylcyclohexylester),
10 % trans-4-Pentylcyclohexancarbonsäure-(trans-4-propylcyclohexylester),
12 % trans, trans-4'-Propylcyclohexyl-4-butyryl-oxycyclohexan,
11 % trans, trans-4'-Propylcyclohexyl-4-hexanoyl-oxycyclohexan,
6 % trans, trans-4-Propylcyclohexyl-cyclohexan-4'-carbonsäure-trans-4-propylcyclohexylester,
6 % trans, trans-4-Propylcyclohexyl-cyclohexan-4'-carbonsäure-trans-4-pentylcyclohexylester,
6 % trans, trans-4-Butylcyclohexyl-cyclohexan-4'-carbonsäure-trans-4-propylcyclohexylester,
5 % trans, trans-4-Butylcyclohexyl-cyclohexan-4'-carbonsäure-trans-4-pentylcyclohexylester,
5 % 4-(trans-4-Propylcyclohexyl)-2'-fluor-4'-(trans-4-propylcyclohexyl)-biphenyl,
4 % 4-(trans-4-Pentylcyclohexyl)-2'-fluor-4'-(trans-4-propylcyclohexyl)-biphenyl,
4 % 4-(trans-4-Pentylcyclohexyl)-2'-fluor-4'-(trans-4-pentylcyclohexyl)-biphenyl,

hat einen Schmelzpunkt von —15,9° und einen Klärpunkt von + 98°.

Beispiel 10

Eine Flüssigkristallphase, bestehend aus

6 % 2-p-Cyanphenyl-5-propyl-1,3-dioxan,
6 % 2-p-Cyanphenyl-5-butyl-1,3-dioxan,
15 % p-trans-4-Propylcyclohexyl-benzonitril,
19 % trans, trans-4'-Propylcyclohexyl-4-butyryl-oxycyclohexan,
18 % trans, trans-4'-Propylcyclohexyl-4-hexanoyl-oxycyclohexan,
6 % trans, trans-4-Propylcyclohexyl-cyclohexan-4'-carbonsäure-trans-4-propylcyclohexylester,
6 % trans, trans-4-Propylcyclohexyl-cyclohexan-4'-carbonsäure-trans-4-pentylcyclohexylester,
6 % trans, trans-4-Butylcyclohexyl-cyclohexan-4'-carbonsäure-trans-4-propylcyclohexylester,
5 % trans, trans-4-Butylcyclohexyl-cyclohexan-4'-carbonsäure-trans-4-pentylcyclohexylester,
5 % 4-(trans-4-Propylcyclohexyl)-2'-fluor-4'-(trans-4-propylcyclohexyl)-biphenyl,
4 % 4-(trans-4-Pentylcyclohexyl)-2'-fluor-4'-(trans-4-propylcyclohexyl)-biphenyl,
4 % 4-(trans-4-Pentylcyclohexyl)-2'-fluor-4'-(trans-4-pentylcyclohexyl)-biphenyl,

hat einen Schmelzpunkt von —7,6° und einen Klärpunkt von + 102°.

Beispiel 11

Eine Flüssigkristallphase, bestehend aus

6 % 2-p-Cyanphenyl-5-propyl-1,3-dioxan,
6 % 2-p-Cyanphenyl-5-butyl-1,3-dioxan,
15 % p-trans-4-Propylcyclohexyl-benzonitril,
15 % trans, trans-4'-Methoxycyclohexyl-4-propyl-cyclohexan,
9 % trans, trans-4'-Propylcyclohexyl-4-butyryl-oxycyclohexan,
9 % trans, trans-4'-Propylcyclohexyl-4-hexanoyl-oxycyclohexan,
6 % trans, trans-4-Propylcyclohexyl-cyclohexan-4'-carbonsäure-trans-4-propylcyclohexylester,
6 % trans, trans-4-Propylcyclohexylcyclohexan-4'-carbonsäure-trans-4-pentylcyclohexylester,
6 % trans, trans-4-Butylcyclohexyl-cyclohexan-4'-carbonsäure-trans-4-propylcyclohexylester,
5 % trans, trans-4-Butylcyclohexyl-cyclohexan-4'-carbonsäure-trans-4-pentylcyclohexylester,
5 % 4-(trans-4-Propylcyclohexyl)-2'-fluor-4'-(trans-4-propylcyclohexyl)-biphenyl,
5 % 4-(trans-4-Pentylcyclohexyl)-2'-fluor-4'-(trans-4-propylcyclohexyl)-biphenyl,
5 % 4-(trans-4-Pentylcyclohexyl)-2'-fluor-4'-(trans-4-pentylcyclohexyl)-biphenyl,
2 % 4-(trans-4-Pentylcyclohexyl)-4'-(trans-4-propylcyclohexyl)-biphenyl,

hat einen Schmelzpunkt von —17,4° und einen Klärpunkt von + 102°.

Beispiel 12

Eine Flüssigkristallphase, bestehend aus

6 % 2-p-Cyanphenyl-5-propyl-1,3-dioxan,
6 % 2-p-Cyanphenyl-5-butyl-1,3-dioxan,
10 % p-trans-4-Propylcyclohexyl-benzonitril,
17 % trans, trans-4'-Methoxycyclohexyl-4-propycyclohexan,
11 % trans, trans-4'-Propylcyclohexyl-4-butyryl-oxycyclohexan,
10 % trans, trans-4'-Propylcyclohexyl-4-hexanoyl-oxycyclohexan,
6 % trans, trans-4-Propylcyclohexylcyclohexan-4'-carbonsäure-trans-4-propylcyclohexylester,
6 % trans, trans-4-Propylcyclohexylcyclohexan-4'-carbonsäure-trans-4-pentylcyclohexylester,
6 % trans, trans-4-Butylcyclohexyl-cyclohexan-4'-carbonsäure-trans-4-propylcyclohexylester,
5 % trans, trans-4-Butylcyclohexyl-cyclohexan-4'-carbonsäure-trans-4-pentylcyclohexylester,
5 % 4-(trans-4-Propylcyclohexyl)-2'-fluor-4'-(trans-4-propylcyclohexyl)-biphenyl,
5 % 4-(trans-4-Pentylcyclohexyl)-2'-fluor-4'-(trans-4-propylcyclohexyl)-biphenyl,
5 % 4-(trans-4-Pentylcyclohexyl)-2'-fluor-4'-(trans-4-pentylcyclohexyl)-biphenyl,
2 % 4-(trans-4-Pentylcyclohexyl)-4'-(trans-4-propylcyclohexyl)-biphenyl

hat einen Schmelzpunkt von —17.2° und einen Schmelzpunkt von + 103°.

Beispiel 13

Eine Flüssigkristallphase, bestehend aus

34 % r-1-Cyan-cis-4-(trans-4-butylcyclohexyl)-1-heptylcyclohexan,
29 % r-1-Cyan-cis-4-(trans-4-pentylcyclohexyl)-1-pentylcyclohexan,
11 % trans, trans-4'-Methoxycyclohexyl-4-propyl-cyclohexan,
10 % trans, trans-4'-Ethoxycyclohexyl-4-propyl-cyclohexan,
4 % 1-(trans-4'-pentylcyclohexyl-4-cyclohexyl)-2-cyan-2-(trans-4-pentylcyclohexyl)-ethan,
4 % 1-(trans-4'-pentylcyclohexyl-4-cyclohexyl)-2-cyan-2-(trans-4-propylcyclohexyl)-ethan,
4 % trans, trans-4-Propylcyclohexyl-cyclohexan-4'-carbonsäure-trans-4-propylcyclohexylester,
4 % trans, trans-4-Propylcyclohexyl-cyclohexan-4'-carbonsäure-trans-4-pentylcyclohexylester,

hat einen Schmelzpunkt von — 8°, einen Klärpunkt von + 68° und eine optische Anisotropie von + 0,028.

Beispiel 14

Eine Flüssigkristallphase bestehend aus

10 % trans-1-p-Methoxyphenyl-4-propylcyclohexan,
10 % trans-1-p-Ethoxyphenyl-4-propylcyclohexan,
33 % trans, trans-4'-Methoxycyclohexyl-4-propyl-cyclohexan,
11 % r-1-Cyan-cis-4-(trans-4-butylcyclohexyl)-1-heptylcyclohexan,
10 % r-1-Cyan-cis-4-(trans-4-pentylcyclohexyl)-1-pentylcyclohexan,
5 % 4,4'-Bis-(trans-4-propylcyclohexyl)-2-fluor-biphenyl,
5 % 4,4'-Bis-(trans-4-pentylcyclohexyl)-2-fluor-biphenyl,
5 % 4-(trans-4-Pentylcyclohexyl)-4'-(trans-4-propylcyclohexyl)-2-fluor-biphenyl,
5 % 4,4'-Bis-(trans-4-propylcyclohexyl)-biphenyl
6 % 4-(trans-4-Pentylcyclohexyl)-4'-(trans-4-propylcyclohexyl)-biphenyl

hat einen Schmelzpunkt von — 19°, einen Klärpunkt von 82°, eine optische Anisotropie von 0,074 und eine dielektrische Anisotropie von — 1,5.

Beispiel 15

Man stellt eine Flüssigkristallphase her bestehend aus :

6 % trans, trans-4-Ethylcyclohexylcyclohexan-4'-carbonitril,
6 % 2-p-Cyanphenyl-5-butyl-1,3-dioxan,
3 % p-trans-4-Propylcyclohexyl-benzonitril,
17 % trans, trans-4'-Methoxycyclohexyl-4-propyl-cyclohexan,
11 % trans, trans-4-Methoxycyclohexyl-4-pentyl-cyclohexan,
10 % trans, trans-4-Ethoxycyclohexyl-4-pentyl-cyclohexan,
10 % trans, trans-4-Butoxycyclohexyl-4-propyl-cyclohexan,
8 % 4-(trans-4-Propylcyclohexyl)-2'-fluor-4'-(trans-4-propylcyclohexyl)-biphenyl,
7 % 4-(trans-4-Pentylcyclohexyl)-4'-(trans-4-propylcyclohexyl)-biphenyl,
6 % trans, trans-4-Propylcyclohexylcyclohexan-4'-carbonsäure-trans-4-pentylcyclohexylester,
6 % trans, trans-4-Butylcyclohexylcyclohexan-4'-carbonsäure-trans-4-propylcyclohexylester,
5 % trans, trans-4-Butylcyclohexylcyclohexan-4'-carbonsäure-trans-4-propylcyclohexylester und
5 % trans, trans-4-Butylcyclohexylcyclohexan-4'-carbonsäure-trans-4-pentylcyclohexylester.

Beispiel 16

Eine Flüssigkristallphase bestehend aus

10 % p-trans-4-Propylcyclohexylbenzonitril,
6 % 2-p-Cyanphenyl-5-propyl-1,3-dioxan,
6 % 2-p-Cyanphenyl-5-butyl-1,3-dioxan,
32 % trans, trans-4'-Methoxycyclohexyl-4-propylcyclohexan,
7 % trans, trans-4'-Ethoxycyclohexyl-4-propylcyclohexan,
6 % trans, trans-4-Propylcyclohexylcyclohexan-4'-carbonsäure-trans-4-propylcyclohexylester,
6 % trans, trans-4-Propylcyclohexylcyclohexan-4'-carbonsäure-trans-4-pentylcyclohexylester,
6 % trans, trans-4-Butylcyclohexylcyclohexan-4'-carbonsäure-trans-4-propylcyclohexylester,
6 % trans, trans-4-Butylcyclohexylcyclohexan-4'-carbonsäure-trans-4-pentylcyclohexylester,
5 % 4,4'-Bis-(trans-4-propylcyclohexyl)-2-fluorbiphenyl,
4 % 4,4'-Bis-(trans-4-pentylcyclohexyl)-2-fluorbiphenyl und
6 % 4-(trans-4-pentylcyclohexyl)-4'-(trans-4-propylcyclohexyl)-2-fluor-biphenyl

hat einen Schmelzpunkt von —13°, einen Klärpunkt von 90°, eine optische Anisotropie von 0,077 und eine Viskosität von 19 (800 ; 3 050).$10^{-3}$ Pa.S bei 20° (—30° ; —40°).

Beispiel 17

Eine Flüssigkristallphase bestehend aus

10 % p-trans-4-Propylcyclohexylbenzonitril,
6 % 2-p-Cyanphenyl-5-propyl-1,3-dioxan,
6 % 2-p-Cyanphenyl-5-butyl-1,3-dioxan,
11 % trans, trans-4'-Methoxycyclohexyl-4-propylcyclohexan,
10 % trans, trans-4'-Ethoxycyclohexyl-4-propylcyclohexan,
11 % trans, trans-4'-Methoxycyclohexyl-4-butylcyclohexan,
11 % trans-1-p-Ethoxyphenyl-4-propylcyclohexan,
4 % trans, trans-4-Propylcyclohexylcyclohexan-4'-carbonsäure-trans-4-propylcyclohexylester,
4 % trans, trans-4-Propylcyclohexylcyclohexan-4'-carbonsäure-trans-4-pentylcyclohexylester,
4 % trans, trans-4-Butylcyclohexylcyclohexan-4'-carbonsäure-trans-4-propylcyclohexylester,
4 % trans, trans-4-Butylcyclohexylcyclohexan-4'-carbonsäure-trans-4-pentylcyclohexylester,
4 % 4,4'-Bis-(trans-4-propylcyclohexyl)-2-fluorbiphenyl,
4 % 4,4'-Bis-(trans-4-pentylcyclohexyl)-2-fluorbiphenyl,
4 % 4-(trans-4-pentylcyclohexyl)-4'-(trans-4-propylcyclohexyl)-2-fluor-biphenyl,
3 % 4,4'-Bis-(trans-4-propylcyclohexyl)-biphenyl und
4 % 4-(trans-4-Pentylcyclohexyl)-4'-(trans-4-propylcyclohexyl)-biphenyl

hat einen Schmelzpunkt von —6°, einen Klärpunkt von 90°, eine optische Anisotropie von 0,084 und eine Viskosität von 18 (780 ; 2 900).$10^{-3}$ Pa.S bei 20° (—30° ; —40°).

Beispiel 18

Eine Flüssigkristallphase bestehend aus

10 % p-trans-4-Propylcyclohexylbenzonitril,
6 % 2-p-Cyanphenyl-5-propyl-1,3-dioxan,
6 % 2-p-Cyanphenyl-5-butyl-1,3-dioxan,
32 % trans, trans-4'-Methoxycyclohexyl-4-propylcyclohexan,
7 % trans-1-p-Ethoxyphenyl-4-propylcyclohexan,
6 % trans, trans-4-Propylcyclohexylcyclohexan-4'-carbonsäure-trans-4-propylcyclohexylester,
5 % trans, trans-4-Propylcyclohexylcyclohexan-4'-carbonsäure-trans-4-pentylcyclohexylester,
6 % trans, trans-4-Butylcyclohexylcyclohexan-4'-carbonsäure-trans-4-propylcyclohexylester,
6 % trans, trans-4-Butylcyclohexylcyclohexan-4'-carbonsäure-trans-4-pentylcyclohexylester,
5 % 4,4'-Bis-(trans-4-propylcyclohexyl)-2-fluorbiphenyl,
6 % 4-(trans-4-Pentylcyclohexyl)-4'-(trans-4-propylcyclohexyl)-2-fluorbiphenyl und
5 % 4-(trans-4-Pentylcyclohexyl)-4'-(trans-4-propylcyclohexyl)-biphenyl

hat einen Schmelzpunkt von —20°, einen Klärpunkt von 90°, eine optische Anisotropie von 0,082 und eine Viskosität von 19,6 (283 ; 842).$10^{-3}$ Pa.S bei 20° (—20° ; —30°).

Beispiel 19

Eine Flüssigkristallphase bestehend aus

10 % p-trans-4-Propylcyclohexylbenzonitril,
6 % 2-p-Cyanphenyl-5-propyl-1,3-dioxan,
6 % 2-p-Cyanphenyl-5-butyl-1,3-dioxan,
32 % trans, trans-4'-Methoxycyclohexyl-4-propylcyclohexan,
7 % trans-1-p-Ethoxyphenyl-4-propylcyclohexan,
6 % trans, trans-4-Propylcyclohexylcyclohexan-4'-carbonsäure-trans-4-propylcyclohexylester,
6 % trans, trans-4-Propylcyclohexylcyclohexan-4'-carbonsäure-trans-4-pentylcyclohexylester,
6 % trans, trans-4-Butylcyclohexylcyclohexan-4'-carbonsäure-trans-4-propylcyclohexylester,
6 % trans, trans-4-Butylcyclohexylcyclohexan-4'-carbonsäure-trans-4-pentylcyclohexylester,
5 % 4,4'-Bis-(trans-4-propylcyclohexyl)-2-fluorbiphenyl,
6 % 4-(trans-4-Pentylcyclohexyl)-4'-(trans-4-propylcyclohexyl)-2-fluorbiphenyl und
4 % 4-(trans-4-Pentylcyclohexyl)-4'-(trans-4-propylcyclohexyl)-biphenyl

hat einen Schmelzpunkt von —20°, einen Klärpunkt von 80°, eine optische Anisotropie von 0,082 und eine Viskosität von 20.$10^{-3}$ Pa.S bei 20°.

Beispiel 20

Eine Flüssigkristallphase bestehend aus

10 % p-trans-4-Propylcyclohexylbenzonitril,
6 % 2-p-Cyanphenyl-5-propyl-1,3-dioxan,
6 % 2-p-Cyanphenyl-5-butyl-1,3-dioxan,
20 % trans, trans-4'-Methoxycyclohexyl-4-propylcyclohexan,
6 % trans, trans-4'-Ethoxycyclohexyl-4-propylcyclohexan,
7 % trans, trans-4'-Methoxycyclohexyl-4-butylcyclohexan,
5 % trans-1-p-Ethoxyphenyl-4-propylcyclohexan,
6 % trans, trans-4-Propylcyclohexylcyclohexan-4'-carbonsäure-trans-4-propylcyclohexylester,
6 % trans, trans-4-Propylcyclohexylcyclohexan-4'-carbonsäure-trans-4-pentylcyclohexylester,
6 % trans, trans-4-Butylcyclohexylcyclohexan-4'-carbonsäure-trans-4-propylcyclohexylester,
6 % trans, trans-4-Butylcyclohexylcyclohexan-4'-carbonsäure-trans-4-pentylcyclohexylester,
5 % 4,4'-Bis-(trans-4-propylcyclohexyl)-2-fluorbiphenyl,
6 % 4,4'-Bis-(trans-4-pentylcyclohexyl)-2-fluorbiphenyl und
5 % 4-(trans-4-pentylcyclohexyl)-4'-(trans-4-propylcyclohexyl)-2-fluor-biphenyl

hat einen Schmelzpunkt von —16°, einen Klärpunkt von 93°, eine optische Anisotropie von 0,079 und eine Viskosität von 22 (970 ; 4 000).$10^{-3}$ Pa.S bei 20° (—30° ; —40°).

Beispiel 21

Eine Flüssigkristallphase bestehend aus

10 % p-trans-4-Propylcyclohexylbenzonitril,
6 % 2-p-Cyanphenyl-5-propyl-1,3-dioxan,
6 % 2-p-Cyanphenyl-5-butyl-1,3-dioxan,
7 % trans, trans-4'-Methoxycyclohexyl-4-propylcyclohexan,
7 % trans, trans-4'-Ethoxycyclohexyl-4-propylcyclohexan,
7 % trans, trans-4'-Methoxycyclohexyl-4-butylcyclohexan,
17 % trans-1-p-Ethoxyphenyl-4-propylcyclohexan,
6 % trans, trans-4-Propylcyclohexylcyclohexan-4'-carbonsäure-trans-4-propylcyclohexylester,
6 % trans, trans-4-Propylcyclohexylcyclohexan-4'-carbonsäure-trans-4-pentylcyclohexylester,
6 % trans, trans-4-Butylcyclohexylcyclohexan-4'-carbonsäure-trans-4-propylcyclohexylester,
6 % trans, trans-4-Butylcyclohexylcyclohexan-4'-carbonsäure-trans-4-pentylcyclohexylester,
5 % 4,4'-Bis-(trans-4-propylcyclohexyl)-2-fluorbiphenyl,
6 % 4,4'-Bis-(trans-4-pentylcyclohexyl)-2-fluorbiphenyl und
5 % 4-(trans-4-pentylcyclohexyl)-4'-(trans-4-propylcyclohexyl)-2-fluor-biphenyl

hat einen Schmelzpunkt von —13°, einen Klärpunkt von 95°, eine optische Anisotropie von 0,084 und eine Viskosität von 21 (900 ; 3 800).$10^{-3}$ Pa.S bei 20° (—30° ; —40°).

Beispiel 22

In einer Flüssigkristallphase aus

21 % r-1-Cyan-cis-4-(trans-4-butylcyclohexyl)-1-heptylcyclohexan
22 % r-1-Cyan-cis-4-(trans-4-pentylcyclohexyl)-1-pentylcyclohexan
12 % trans, trans-4-Propyl-4'-methoxycyclohexylcyclohexan
9 % trans, trans-4-Propyl-4'-ethoxycyclohexylcyclohexan
4 % trans, trans-4-Propylcyclohexylcyclohexan-4'-carbonsäure-trans-4-propylcyclohexylester
4 % trans, trans-4-Propylcyclohexylcyclohexan-4'-carbonsäure-trans-4-pentylcyclohexylester
4 % trans, trans-4-Butylcyclohexylcyclohexan-4'-carbonsäure-trans-4-propylcyclohexylester
4 % trans, trans-4-Butylcyclohexylcyclohexan-4'-carbonsäure-trans-4-pentylcyclohexylester und
20 % r-1-Cyan-cis-4-(trans-4-pentylcyclohexyl)-1-(trans-4-propylcyclohexyl)-cyclohexan

wurden

1,0 % Azofarbstoff (λ max = 460 nm, Formel VI', $R_1$ = 2-Nonylmercapto-1,3,4-thiadiazol-5-yl, $R_2$ = p -(4-Butylcyclohexyl)-benzyl, n = 1, $Ph_2$ = 1,4-Naphthylen, $Ph_3$ = 2,5-Tolylen) und

1,3 % Azofarbstoff (λ max = 615 nm, Formel V', $R_1$ — $Ph_1$ = 3-Octylmercapto-1,2,4-thiadiazol-5-yl, $R_2$ = p-(4-Butylcyclohexyl)-benzylamino, n = 1, $Ph_2$ = 2,5-Xylylen, $Ph_3$ = 1,4-Naphthylen) gelöst (K. 100°).

Dieses Guest-Host-System zeigt in einem elektrooptischen Anzeigeelement bei einer Schichtdicke von 1 µm bei Kunstlicht (CIE-A) einen Farbabstand ΔE bis zum Achromasiepunkt von 0,3 und bei Tageslicht (CIE-D 65) einen Farbabstand ΔE von 1,0.

Beispiel 23

In einer Flüssigkristallphase aus

34 % r-1-Cyan-cis-4-(trans-4-butylcyclohexyl)-1-heptylcyclohexan,
30 % r-1-Cyan-cis-4-(trans-4-pentylcyclohexyl)-1-pentylcyclohexan,
11 % trans, trans-4-Propyl-4'-methoxycyclohecylcyclohexan,
9 % trans, trans-4-Propyl-4'-propoxycyclohexylcyclohexan,
4 % trans, trans-4-Butylcyclohexylcyclohexan-4'-carbonsäure-trans-4-propylcyclohexylester,
4 % trans, trans-4-Butylcyclohexylcyclohexan-4'-carbonsäure-trans-4-pentylcyclohexylester,
4 % trans, trans-4-Propylcyclohexylcyclohexan-4'-carbonsäure-trans-4-propylcyclohexylester und
4 % trans, trans-4-Propylcyclohexylcyclohexan-4'-carbonsäure-trans-4-pentycyclohexylester

wurden

0,12 % Azofarbstoff (λ max = 430 nm, Formel V', $R_1 = R_2$ = p-(4-Propylcyclohexyl)-benzyloxy, n = 2),

0,88 % Azofarbstoff (λ max = 460, Formel VI', $R_1$ = 2-Nonylmercapto-1,3,4-thiadiazol-5-yl, $R_2$ = p-(4-Butylcyclohexyl)-benzyl, n = 1, $Ph_2$ = 1,4-Naphthylen, $Ph_3$ = 2,5-Tolylen) und

1,30 % Azofarbstoff (λ max = 615 nm, Formel V', $R_1$ — $Ph_1$ = 3-Octylmercapto-1,2,4-thiadiazol-5-yl, $R_2$ = p-(4-Butylcyclohexyl)-benzylamino, n = 1, $Ph_2$ = 2,5-Xylylen, $Ph_3$ = 1,4-Naphthylen)
gelöst (K. 72°).

Dieses Guest-Host-System zeigt in einem elektrooptischen Anzeigeelement bei einer Schichtdicke von 5 µm (10 µm) bei Kunstlicht (CIE-A) einen Farbabstand ΔE bis zum Achromasiepunkt von 0,62 (0,81) und bei Tageslicht (CIE-D 65) einen Farbabstand ΔE von 0,22 (0,43).

Beispiel 24

In der Flüssigkristallphase aus Beispiel 22 werden

0,45 % Azofarbstoff (λ max = 393 nm, Formel VI', $R_1 = C_4H_9$, $R_2 = C_3H_7$, n = 1),

1,55 % Azofarbstoff (λ max = 460 nm, Formel VI', $R_1$ = 2-Nonylmercapto-1,3,4-thiadiazol-5-yl, $R_2$ = p-(4-Butylcyclohexyl)-benzyl, n = 1, $Ph_2$ = 1,4-Naphthylen, $Ph_3$ = 2,5-Tolylen) und

2,22 % Azofarbstoff (λ max = 615 nm, Formel V', $R_1$ — $Ph_1$ = 3-Octylmercapto-1,2,4-thiadiazol-5-yl, $R_2$ = p-(4-Butylcyclohexyl)-benzylamino, n = 1, $Ph_2$ = 2,5-Xylylen, $Ph_3$ = 1,4-Naphthylen)
gelöst (K. 101°).

Dieses Guest-Host-System zeigt in einem elektrooptischen Anzeigeelement bei einer Schichtdicke von 4 µm (10 µm) bei Kunstlicht (CIE-A) einen Farbabstand ΔE bis zum Achromasiepunkt von 0,99 (0,81) und bei Tageslicht (CIE-D 65) einen Farbabstand ΔE von 2,27 (0,38).

Beispiel 25

In der Flüssigkristallphase aus Beispiel 22 werden

0,39 % Azofarbstoff G 232 (λ max = 443 nm, Formel V', $R_1 = R_2 = NHC_4H_9$, n = 2, $Ph_3$ = 1,4-Naphthylen),

0,50 % Azofarbstoff G 241 (λ max = 558 nm, Formel V', $R_1 = C_4H_9$, $R_2 = N(C_2H_5)_2$, n = 2, $Ph_3$ = 1,4-Naphthylen),

1,30 % eines Gemisches von Naphthochinonfarbstoffen der Formel IV' (erhältlich durch Umsetzung von 4,8-Diamino-1,5-naphthochinon mit äquimolaren Mengen von 4-n-Butoxyanilin, 4-n-Pentoxyanilin, 4-n-Hexyloxyanilin und 4-n-Heptyloxyanilin, λ max = 685)
gelöst (K. 99°).

Dieses Guest-Host-System zeigt in einem elektrooptischen Anzeigeelement bei einer Schichtdicke von 1 µm (2 µm) bei Kunstlicht (CIE-A) einen Farbabstand ΔE bis zum Achromasiepunkt von 0,40 (0,79) und bei Tageslicht (CIE-D 65) einen Farbabstand ΔE von 0,54 (0,96).

Beispiel 26

In der Flüssigkristallphase aus Beispiel 23 werden

0,29 % Azofarbstoff G 232 (λ max = 443 nm, Formel V', $R_1 = R_2 = —NHC_4H_9$, n = 2, $Ph_3$ = 1,4-Naphthylen),

0,09 % Azofarbstoff G 239 ($\lambda$ max = 512 nm, Formel V', $R_1 = C_4H_9$, $R_2 = N(CH_3)_2$, n = 1, $Ph_2$ = 1,4-Naphthylen),

0,33 % Azofarbstoff G 241 ($\lambda$ max = 558 nm, Formel V', $R_1 = C_4H_9$, $R_2 = N(C_2H_5)_2$, n = 2, $Ph_3$ = 1,4-Naphthylen) und

1,32 % eines Gemisches von Naphthochinonfarbstoffen der Formel IV' (erhältlich durch Umsetzung von 4,8-Diamino-1,5-naphthochinon mit äquimolaren Mengen von 4-n-Butoxyanilin, 4-n-Pentoxyanilin, 4-n-Hexyloxyanilin und 4-n-Heptyloxyanilin, $\lambda$ max = 685 nm)

gelöst (K. 70°).

Dieses Guest-Host-System zeigt in einem elektrooptischer. Anzeigeelement bei einer Schichtdicke von 2 µm (7 µm) bei Kunstlicht (CIE-A) einen Farbabstand ΔE bis zum Achromasiepunkt von 0,13 (0,32) und bei Tageslicht (CIE-D 65) einen Farbabstand ΔE von 0,27 (0,57).

## Beispiel 27

In der Flüssigkristallphase aus Beispiel 23 werden

0,20 % Azofarbstoff ($\lambda$ max = 430 nm, Formel V', $R_1 = R_2$ = p-(4-Propylcyclohexyl)-benzyloxy, n = 2),

0,50 % Azofarbstoff ($\lambda$ max = 460, Formel VI', $R_1$ = 2-Nonylmercapto-1,3,4-thiadiazol-5-yl, $R_2$ = p-(4-Butylcyclohexyl)-benzyl, n = 1, $Ph_2$ = 1,4-Naphthylen, $Ph_3$ = 2,5-Tolylen),

0,36 % Azofarbstoff ($\lambda$ max = 548, Formel V', $R_1$ = 2-Nonylmercapto-1,3,4-thiadiazol-5-yl, $R_2$ = Butyl-methyl-amino, n = 1, $Ph_2$ = 1,4-Naphthylen),

0,70 % Anthrachinonfarbstoff ($\lambda$ max = 638 nm, Formel III', $R_3 = R_2 = R_4$ = Z = Y = H, W = X = $NH_2$, $R_1$ = 2-[p-(4-Butylcyclohexyl)-benzylmercapto-1,3,4-oxadiazol-5-yl) und

1,10 % eines Gemisches von Naphthochinonfarbstoffen der Formel IV' (erhältlich durch Umsetzung von 4,8-Diamino-1,5-naphthochinon mit äquimolaren Mengen von 4-n-Butoxyanilin, 4-n-Pentoxyanilin, 4-n-Hexyloxyanilin und 4-n-Heptyloxyanilin, $\lambda$ max = 685 nm)

gelöst (K. 71°).

Dieses Guest-Host-System zeigt in einem elektrooptischen Anzeigeelement bei einer Schichtdicke von 2 µm (9 µm) bei Kunstlicht (CIE-A) einen Farbabstand ΔE bis zum Achromasiepunkt von 0,18 (0,57) und bei Tageslicht (CIE-D 65) einen Farbabstand von 0,19 (0,01).

## Beispiel 28

In der Flüssigkristallphase aus Beispiel 22 werden

0,85 % Azofarbstoff ($\lambda$ max = 460 nm, Formel VI', $R_1$ = 2-Nonylmercapto-1,3,4-thiadiazol-5-yl, $R_2$ = p-(4-Butylcyclohexyl)-benzyl, n = 1, $Ph_2$ = 1,4-Naphthylen, $Ph_3$ = 2,5-Tolylen),

0,90 % Azofarbstoff ($\lambda$ max = 615 nm, Formel V', $R_1$ — $Ph_1$ = 3-Octylmercapto-1,2,4-thiadiazol-5-yl, $R_2$ = p-(4-Butylcyclohexyl)-benzyl-amino, n = 1, $Ph_2$ = 2,5-Xylylen, $Ph_3$ = 1,4-Naphthylen),

0,20 % Azofarbstoff ($\lambda$ max = 430 nm, Formel V', $R_1 = R_2$ = p-(4-Propylcyclohexyl)-benzyloxy, n = 2),

0,28 Azofarbstoff ($\lambda$ max = 548 nm, Formel V', $R_1$ = 2-Nonylmercapto-1,3,4-thiadiazol-5-yl, $R_2$ = Butyl-methyl-amino, n = 1, $Ph_2$ = 1,4-Naphthylen) und

1,10 % eines Gemisches von Naphthochinonfarbstoffen der Formel IV' (erhältlich durch Umsetzung von 4,8-Diamino-1,5-naphthochinon mit äquimolaren Mengen von 4-n-Butoxyanilin, 4-n-Pentoxyanilin, 4-n-Hexyloxyanilin und 4-n-Heptyloxyanilin, $\lambda$ max = 685 nm)

gelöst (K. 101°).

Dieses Guest-Host-System zeigt in einem elektrooptischen Anzeigeelement bei einer Schichtdicke von 2 µm (10 µm) bei Kunstlicht (CIE-A) einen Farbabstand ΔE bis zum Achromasiepunkt von 0,64 (0,33) und bei Tageslicht (CIE-D 65) einen Farbabstand ΔE von 0,35 (0,29).

Die in den Beispielen 22 bis 28 beschriebenen Guest-Host-Systeme sind sehr stabil, eignen sich vorzüglich zur Positiv-Darstellung und weisen steile Transmissionskennlinien auf. Die entsprechenden, verwendbaren elektrooptischen Anzeigeelemente können eine einfache Zellentechnologie aufweisen, d. h. es ist kein Polarisator und kein Pretilt erforderlich.

Bei den Azofarbstoffen der Formeln V' und VI' in den Beispielen 22 bis 28 ist Ph jeweils 1,4-Phenylen, falls nichts anderes angegeben ist.

## Beispiel 29

Eine Flüssigkristallphase bestehend aus

8 % 2-(trans-4-Cyancyclohexyl)-5-propyl-1,3-dioxan,
10 % 2-(trans-4-Cyancyclohexyl)-5-butyl-1,3-dioxan,
8 % 2-(trans-4-Cyancyclohexyl)-5-pentyl-1,3-dioxan,

10 % p-trans-4-Propylcyclohexyl-benzonitril,
8 % trans, trans-4'-Methoxycyclohexyl-4-propylcyclohexan,
5 % trans, trans-4'-Ethoxycyclohexyl-4-propylcyclohexan,
13 % trans, trans-4'-Methoxycyclohexyl-4-butylcyclohexan,
11 % trans, trans-4'-Methoxycyclohexyl-4-pentylcyclohexan,
6 % trans, trans-4'-Ethoxycyclohexyl-4-pentylcyclohexan,
7 % 4-(trans-4-Pentylcyclohexyl)-4'-(trans-4-propylcyclohexyl)-2-fluorbiphenyl,
7 % 4,4'-Bis-(trans-4-Propylcyclohexyl)-2-fluorbiphenyl und
7 % 4,4'-Bis-(trans-4-Pentylcyclohexyl)-2-fluorbiphenyl

hat einen Schmelzpunkt von —14°, einen Klärpunkt von 72°, eine Viskosität von $23.10^{-3}$ Pa.s bei 20°, eine optische Anisotropie von 0,08 und eine Schwellenspannung von 1,8 Volt. Diese Phase zeichnet sich durch eine positive dielektrische Anisotropie und eine niedrige optische Anisotropie aus.

Beispiel 30

Eine Flüssigkristallphase bestehend aus

20 % r-1-Cyan-cis-4-(trans-4-butylcyclohexyl)-1-heptylcyclohexan,
20 % r-1-Cyan-cis-4-(trans-4-pentylcyclohexyl)-1-pentylcyclohexan,
12 % trans, trans-4'-Methoxycyclohexyl-4-butylcyclohexan,
10 % trans, trans-4'-Methoxycyclohexyl-4-pentylcyclohexan,
8 % trans, trans-4'-Ethoxycyclohexyl-4-pentylcyclohexan,
11 % 1-(trans-4-Propylcyclohexyl)-2-(trans, trans-4'-propylbicyclohexyl-4-yl)-ethan,
11 % 1-(trans-4-Pentylcyclohexyl)-2-(trans, trans-4'-pentylbicyclohex-4-yl)-ethan und
8 % 4,4'-Bis-(trans-4-Propylcyclohexyl)-2-fluorbiphenyl

hat einen Schmelzpunkt von —10°, einen Klärpunkt von 85°, eine Viskosität von $32.10^{-3}$ Pa.s bei 20°, eine optische Anisotropie von 0,045 und eine dielektrische Anisotropie von —3,2. Diese Phase zeichnet sich durch eine negative dielektrische Anisotropie und eine sehr niedrige optische Anisotropie aus.

Beispiel 31

Eine Flüssigkristallphase bestehend aus

6 % 2-p-Cyanphenyl-5-propyl-1,3-dioxan,
6 % 2-p-Cyanphenyl-5-butyl-1,3-dioxan,
10 % p-trans-4-Propylcyclohexyl-benzonitril,
6 % trans, trans-4'-Ethoxycyclohexyl-4-propylcyclohexan,
18 % trans, trans-4'-Methoxycyclohexyl-4-pentylcyclohexan,
12 % trans, trans-4'-Ethoxycyclohexyl-4-pentylcyclohexan,
12 % trans, trans-4'-Butyryloxycyclohexyl-4-propylcyclohexan,
3 % trans, trans-4-Propylcyclohexylcyclohexan-4'-carbonsäure-trans-4-propylcyclohexylester,
3 % trans, trans-4-Propylcyclohexylcyclohexan-4'-carbonsäure-trans-4-pentylcyclohexylester,
3 % trans, trans-4-Butylcyclohexylcyclohexan-4'-carbonsäure-trans-4-propylcyclohexylester,
3 % trans, trans-4-Butylcyclohexylcyclohexan-4'-carbonsäure-trans-4-pentylcyclohexylester,
3 % 1-(trans-4-Propylcyclohexyl)-2-(trans, trans-4'-propylbicyclohex-4-yl)-ethan,
4 % 1-(trans-4-Pentylcyclohexyl)-2-(trans, trans-4'-pentylbicyclohex-4-yl)-ethan,
3 % 4,4'-Bis-(trans-4-Propylcyclohexyl)-2-fluorbiphenyl,
4 % 4,4'-Bis-(trans-4-Pentylcyclohexyl)-2-fluorbiphenyl, und
4 % 4-(trans-4-Pentylcyclohexyl)-4'-(trans-4-propylcyclohexyl)-2-fluorbiphenyl

hat einen Schmelzpunkt von —17°, einen Klärpunkt von 85°, bis —40° keinen Phasenübergang smektisch/nematisch, eine Viskosität von $19.10^{-3}$ ($780.10^{-3}$) Pa.s bei 20° (—30°), eine optische Anisotropie von 0,084 und eine Schwellenspannung von 2,7 Volt. Diese Phase zeichnet sich durch eine positive dielektrische Anisotropie, einen hohen Klärpunkt und einen breiten nematischen Bereich aus.

Beispiel 32

Eine Flüssigkristallphase bestehend aus

11 % p-trans-4-Propylcyclohexyl-benzonitril,
10 % p-trans-4-Butylcyclohexyl-benzonitril,
18 % 2-(trans-4-Pentylcyclohexyl)-5-ethyl-1,3-dioxan,
15 % 2-(trans-4-Ethoxycyclohexyl)-5-propyl-1,3-dioxan,

5 % p-(trans, trans-4-Propylcyclohexylcyclohex-4'-yl)-benzonitril,
4 % 4-Cyan-4'-(trans-4-pentylcyclohexyl)-biphenyl,
25 % trans-4-Propylcyclohexancarbonsäure-(trans-4-propylcyclohexylester),
6 % trans, trans-4-Propylcyclohexylcyclohexan-4'-carbonsäure-trans-4-propylcyclohexylester und
6 % 4,4'-Bis-(trans-4-propylcyclohexyl)-2-fluorbiphenyl

hat einen Schmelzpunkt von —16°, einen Klärpunkt von 61°, eine Viskosität von $17.10^{-3}$ Pa.s bei 20°, eine optische Anisotropie von 0,09 und eine Schwellenspannung von 2,7 Volt. Diese Phase zeichnet sich durch eine positive dielektrische Anisotropie, eine niedrige optische Anisotropie, eine besonders niedrige Viskosität und durch eine gute Steilheit der elektrooptischen Kennlinie aus.

Beispiel 33

Eine Flüssigkristallphase bestehend aus

8 % 2-p-Cyanphenyl-5-propyl-1,3-dioxan,
7 % 2-p-Cyanphenyl-5-butyl-1,3-dioxan,
7 % 2-p-Cyanphenyl-5-pentyl-1,3-dioxan,
6 % trans, trans-4'-Ethoxycyclohexyl-4-propylcyclohexan,
9 % trans, trans-4'-Methoxycyclohexyl-4-butylcyclohexan,
14 % trans, trans-4'-Methoxycyclohexyl-4-pentylcyclohexan,
10 % trans, trans-4'-Ethoxycyclohexyl-4-pentylcyclohexan,
12 % trans, trans-4'-Butyryloxycyclohexyl-4-propylcyclohexan,
3 % trans, trans, trans-4-Propylcyclohexylcyclohexyl-cyclohexan-4''-carbonitril,
3 % trans, trans, trans-4-Butylcyclohexylcyclohexyl-cyclohexan-4''-carbonitril,
3 % trans, trans, trans-4-Pentylcyclohexylcyclohexyl-cyclohexan-4''-carbonitril,
3 % p-(trans, trans-4-Propylcyclohexylcyclohex-4'-yl)-benzonitril,
3 % 4,4'-Bis-(trans-4-Propylcyclohexyl)-2-fluorbiphenyl,
4 % 4,4'-Bis-(trans-4-Pentylcyclohexyl)-2-fluorbiphenyl,
4 % 4-(trans-4-Pentylcyclohexyl)-4'-(trans-4-propylcyclohexyl)-2-fluorbiphenyl und
4 % 4,4'-Bis-(trans-4-propylcyclohexyl)-biphenyl

hat einen Schmelzpunkt von —16°, einen Klärpunkt von 93°, eine Viskosität von $24.10^{-3}$ ($850.10^{-3}$) Pa.s bei 20° (—30°), eine optische Anisotropie von 0,082 und eine Schwellenspannung von 2,5 Volt. Diese Phase zeichnet sich durch eine niedrige Viskosität, eine niedrige optische Anisotropie und einen breiten nematischen Bereich aus.

Beispiel 34

Eine Flüssigkristallphase bestehend aus

16 % p-trans-4-Propylcyclohexylbenzonitril,
9 % p-trans-4-Butylcyclohexylbenzonitril,
12 % trans, trans-4'-Propoxycyclohexyl-4-propylcyclohexan,
12 % trans, trans-4'-Methoxycyclohexyl-4-pentylcyclohexan,
12 % trans, trans-4'-Ethoxycyclohexyl-4-pentylcyclohexan,
9 % trans, trans-4'-Propylcyclohexyl-4-butyryloxycyclohexan,
12 % 1-(trans-4-Propylcyclohexyl)-2-[trans-4-(trans-4-pentylcyclohexyl)-cyclohexyl]-ethan,
3 % 4,4'-Bis-(trans-4-propylcyclohexyl)-2-fluorbiphenyl,
3 % 4,4'-Bis-(trans-4-pentylcyclohexyl)-2-fluorbiphenyl,
5 % 4-(trans-4-pentylcyclohexyl)-4'-(trans-4-propylcyclohexyl)-2-fluorbiphenyl,
3 % 4,4'-Bis-(trans-4-propylcyclohexyl)-biphenyl und
4 % 4-(trans-4-pentylcyclohexyl)-4'-(trans-4-propylcyclohexyl)-biphenyl

hat einen Klärpunkt von 95°, eine Viskosität von $20.10^{-3}$ Pa.S bei 20°, eine optische Anisotropie von 0,084 und eine Schwellenspannung von 2,5 Volt.

Beispiel 35

Eine Flüssigkristallphase bestehend aus

12 % trans, trans-4'-Propoxycyclohexyl-4-propylcyclohexan,
12 % trans, trans-4'-Methoxycyclohexyl-4-pentylcyclohexan,
12 % trans, trans-4'-Ethoxycyclohexyl-4-pentylcyclohexan,
9 % trans, trans-4'-Propylcyclohexyl-4-butyryloxycyclohexan,

3 % trans, trans-4-Propylcyclohexylcyclohexan-4'-carbonsäure-trans-4-propylcyclohexylester,
3 % trans, trans-4-Propylcyclohexylcyclohexan-4'-carbonsäure-trans-4-pentylcyclohexylester,
3 % trans, trans-4-Butylcyclohexylcyclohexan-4'-carbonsäure-trans-4-propylcyclohexylester,
3 % trans, trans-4-Butylcyclohexylcyclohexyn-4'-carbonsäure-trans-pentylcyclohexylester,
3 % 4,4'-Bis-(trans-4-propylcyclohexyl)-2-fluorbiphenyl,
3 % 4,4'-Bis-(trans-4-pentylcyclohexyl)-2-fluorbiphenyl,
3 % 4,4'-Bis-(trans-4-propylcyclohexyl)-biphenyl,
4 % 4-(trans-4-Pentylcyclohexyl)-4'-(trans-4-propylcyclohexyl)-biphenyl,
5 % 4-(trans-4-Pentylcyclohexyl)-4'-(trans-4-propylcyclohexyl)-2-fluorbiphenyl,
16 % p-trans-4-Propylcyclohexylbenzonitril und
9 % p-trans-4-Butylcyclohexylbenzonitril

hat einen Schmelzpunkt von —16°, einen Klärpunkt von 95°, bis —40° keinen Phasenübergang smektisch/nematisch, eine Viskosität von 20 (300 ; 3 100).$10^{-3}$ Pa.s bei 20° (—20° ; —40°), eine dielektrische Anisotropie von + 4,6, eine optische Anisotropie von 0,0868 und eine Schwellenspannung von 2,5 Volt.

Beispiel 36

Eine Flüssigkristallphase bestehend aus

12 % trans, trans-4'-Propoxycyclohexyl-4-propylcyclohexan,
16 % trans, trans-4'-Methoxycyclohexyl-4-pentylcyclohexan,
10 % trans, trans-4'-Ethoxycyclohexyl-4-pentylcyclohexan,
10 % trans, trans-4'-Propylcyclohexyl-4-butyryloxycyclohexan,
3 % trans, trans-4-Propylcyclohexylcyclohexan-4'-carbonsäure-trans-4-propylcyclohexylester,
3 % trans, trans-4-Propylcyclohexylcyclohexan-4'-carbonsäure-trans-4-pentylcyclohexylester,
3 % trans, trans-4-Butylcyclohexylcyclohexan-4'-carbonsäure-trans-4-propylcyclohexylester,
3 % trans, trans-4-Butylcyclohexylcyclohexyn-4'-carbonsäure-trans-pentylcyclohexylester,
3 % 4,4'-Bis-(trans-4-propylcyclohexyl)-2-fluorbiphenyl,
3 % 4,4'-Bis-(trans-4-pentylcyclohexyl)-2-fluorbiphenyl,
3 % 4,4'-Bis-(trans-4-propylcyclohexyl)-biphenyl,
5 % 4-(trans-4-Pentylcyclohexyl)-4'-(trans-4-propylcyclohexyl)-biphenyl,
4 % 4-(trans-4-Pentylcyclohexyl)-4'-(trans-4-propylcyclohexyl)-2-fluorbiphenyl
15 % p-trans-4-Propylcyclohexylbenzonitril und
7 % trans-1-p-Ethoxyphenyl-4-propylcyclohexan

hat einen Schmelzpunkt von —18°, einen Klärpunkt von 95°, bis —40° keinen Phasenübergang smektisch/nematisch, eine Viskosität von 19 (235 ; 2 270).$10^{-3}$ Pa.s bei 20° (—20° ; —40°), eine dielektrische Anisotropie von + 2,8, eine optische Anisotropie von 0,0830 und eine Schwellenspannung von 3,1 Volt.

Beispiel 37

Man stellt eine Flüssigkristallphase her bestehend aus

20 % r-1-Cyan-cis-4-(trans-4-butylcyclohexyl)-1-heptylcyclohexan,
21 % r-1-Cyan-cis-4-(trans-4-pentylcyclohexyl)-1-pentylcyclohexan,
11 % trans, trans-4'-Methoxycyclohexyl-4-propylcyclohexan,
10 % trans, trans-4'-Ethoxycyclohexyl-4-propylcyclohexan,
4 % trans, trans-4-Propylcyclohexylcyclohexan-4'-carbonsäure-trans-4-propylcyclohexylester,
4 % trans, trans-4-Propylcyclohexylcyclohexan-4'-carbonsäure-trans-4-pentylcyclohexylester,
4 % trans, trans-4-Butylcyclohexylcyclohexan-4'-carbonsäure-trans-4-propylcyclohexylester,
4 % trans, trans-4-Butylcyclohecylcyclohexan-4'-carbonsäure-trans-4-pentylcyclohexylester und
22 % r-1-Cyan-1-propyl-cis-4-[trans-4-(trans-4-pentylcyclohexyl)-cyclohexyl]-cyclohexan.

Beispiel 38

Man stellt eine Flüssigkristallphase her bestehend aus

20 % r-1-Cyan-cis-4-(trans-4-butylcyclohexyl)-1-heptylcyclohexan,
21 % r-1-Cyan-cis-4-(trans-4-pentylcyclohexyl)-1-pentylcyclohexan,
11 % trans, trans-4'-Methoxycyclohexyl-4-propylcyclohexan,
10 % trans, trans-4'-Ethoxycyclohexyl-4-propylcyclohexan,
4 % trans, trans-4-Propylcyclohexylcyclohexan-4'-carbonsäure-trans-4-propylcyclohexylester,

4 % trans, trans-4-Propylcyclohexylcyclohexan-4'-carbonsäure-trans-4-pentylcyclohexylester,
4 % trans, trans-4-Butylcyclohexylcyclohexan-4'-carbonsäure-trans-4-propylcyclohexylester,
4 % trans, trans-4-Butylcyclohecylcyclohexan-4'-carbonsäure-trans-4-pentylcyclohexylester und
22 % r-1-Cyan-1-(5-propyl-1,3-dioxan-2-yl)-cis-4-(trans-4-pentylcyclohexyl)-cyclohexan.

Beispiel 39

Eine Flüssigkristallphase bestehend aus

20 % r-1-Cyan-cis-4-(trans-4-butylcyclohexyl)-1-heptylcyclohexan,
21 % r-1-Cyan-cis-4-(trans-4-pentylcyclohexyl)-1-pentylcyclohexan,
11 % trans, trans-4'-Methoxycyclohexyl-4-propylcyclohexan,
10 % trans, trans-4'-Ethoxycyclohexyl-4-propylcyclohexan,
4 % trans, trans-4-Propylcyclohexylcyclohexan-4'-carbonsäure-trans-4-propylcyclohexylester,
4 % trans, trans-4-Propylcyclohexylcyclohexan-4'-carbonsäure-trans-4-pentylcyclohexylester,
4 % trans, trans-4-Butylcyclohexylcyclohexan-4'-carbonsäure-trans-4-propylcyclohexylester,
4 % trans, trans-4-Butylcyclohecylcyclohexan-4'-carbonsäure-trans-4-pentylcyclohexylester und
22 % r-1-Cyan-cis-4-(trans-4-pentylcyclohexyl)-1-(trans-4-pentylcyclohexyl)-cyclohexan

hat einen Schmelzpunkt von —3°, einen Klärpunkt von 100° und eine optische Anisotropie von 0,0437. Die Phase ist ein ausgezeichneter Host für pleochroitische Farbstoffe, insbesondere für Azofarbstoffe. Die Guest-Host-Mischungen eignen sich vorzüglich für GH-Displays mit positivem Kontrast.

Die in den Beispielen 5 bis 12, 15 bis 21, 29 und 31 bis 36 beschriebenen FK-Phasen sind besonders gut als Breitbereichsmischungen geeignet, während die in den Beispielen 1 bis 4, 13, 14 und 30 beschriebenen FK-Phasen gut für Guest-Host-Displays mit positivem Kontrast geeignet sind.

**Patentansprüche**

1. Flüssigkristallphase, dadurch gekennzeichnet, daß sie mindestens eine Komponente ausgewählt aus der Gruppe A bestehend aus den Verbindungen der Formeln I bis IV

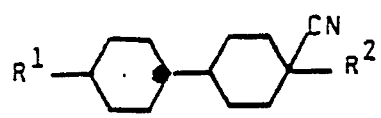
(I)

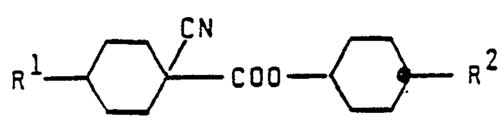
(II)

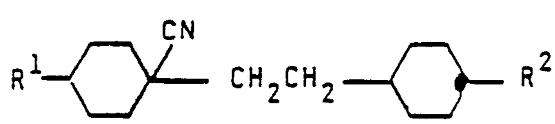
(III)

worin $R^1$ und $R^2$ jeweils R,

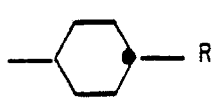 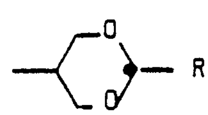 oder 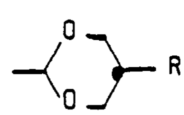 und

R Alkyl mit 1 bis 12 C-Atomen, worin auch eine oder zwei nicht benachbarte $CH_2$-Gruppen durch —O—, —CO—, —O—CO— oder —CO—O ersetzt sein können, bedeuten,

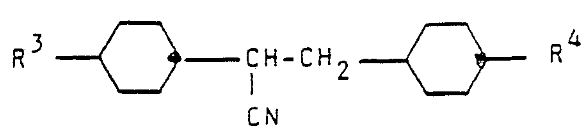
(IV)

worin $R^3$ und $R^4$ jeweils R oder

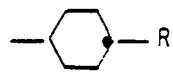

bedeuten und R die oben angegebene Bedeutung hat, und/oder mindestens eine Komponente ausgewählt aus der Gruppe B bestehend aus den Verbindungen der Formeln V und VI

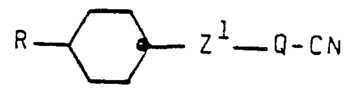 (V)

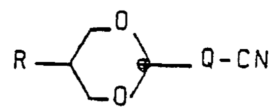 (VI)

worin R die oben angegebene Bedeutung hat, Q

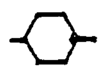 oder 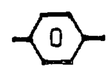

ist, und $Z^1$

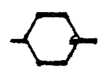

eine Einfachbindung, $—CH_2CH_2—$, —CO—O oder —O—CO— bedeutet, und mindestens eine Komponente ausgewählt aus der Gruppe C bestehend aus den Verbindungen der Formeln VII bis X

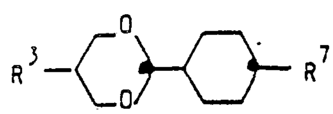 (VII)

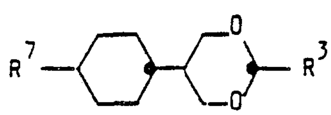 (VIII)

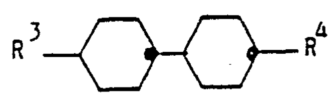 (IX)

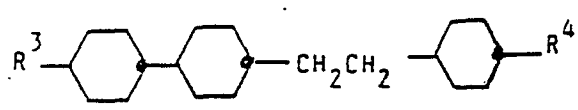 (X)

worin $R^3$ und $R^4$ die oben angegebene Bedeutung haben und $R^7$ die Bedeutung von

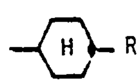

oder $R^8$ annehmen kann wobei R wie angegeben definiert ist, und $R^8$ Alkyl mit 1 bis 12 C-Atomen, worin auch eine oder zwei nicht benachbarte $CH_2$-Gruppen durch —O— oder —CO— ersetzt sein können, bedeutet,

und gegebenenfalls eine oder mehrere Komponenten ausgewählt aus der Gruppe D bestehend aus den Verbindungen der Formeln XI bis XIII

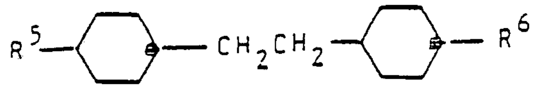
(XI)

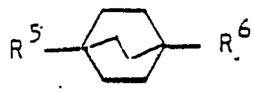
(XII)

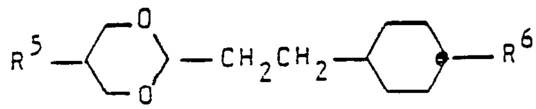
(XIII)

worin $R^5$ und $R^6$ jeweils unabhängig voneinander Alkyl mit 1 bis 12 C-Atomen, worin auch eine oder zwei nicht benachbarte $CH_2$-Gruppen durch —O—, —CO—, —O—CO— oder —CO—O— ersetzt sein können, bedeuten,
und gegebenenfalls eine oder mehrere Komponenten ausgewählt aus der Gruppe E bestehend aus den Verbindungen der Formeln XIV und XV,

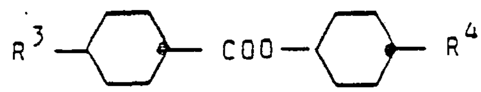
(XIV)

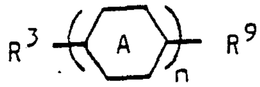
(XV)

worin $R^3$ und $R^4$ jeweils R oder

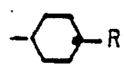

$R^9$ R,

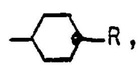

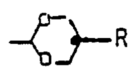

oder, im Falle n = 2, auch CN,
n 2 oder, im Falle $R^3$ =

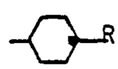

auch 1, und
A eine gegebenenfalls in 2- oder 3-Position fluorierte 1,4-Phenylengruppe bedeutet,
enthält, mit der Maßgabe, daß die Flüssigkristall-Phase bei Anwesenheit von Verbindungen der Formel V und/oder VI, worin Q 1,4-Phenylen bedeutet, mindestens eine Komponente der Formel IX, worin $R^3$ n-Alkyl und $R^4$ n-Alkyl, n-Alkoxy oder n-Alkanoyloxy mit jeweils 1-12 C-Atomen bedeutet, und mindestens eine Komponente aus der Gruppe E enthält.

2. Flüssigkristallphase nach Anspruch 1, dadurch gekennzeichnet, daß sie mindestens zwei Komponenten ausgewählt aus der Gruppe A enthält.

3. Flüssigkristallphase nach Anspruch 1, dadurch gekennzeichnet, daß sie mindestens zwei Komponenten ausgewählt aus der Gruppe B enthält.

4. Flüssigkristallphase nach Anspruch 1, dadurch gekennzeichnet, daß sie mindestens zwei Komponenten ausgewählt aus der Gruppe A oder B und mindestens eine Komponente ausgewählt aus der Gruppe D enthält.

5. Flüssigkristallphase nach einem der Ansprüche 1, 2, 3 oder 4, dadurch gekennzeichnet, daß der Gewichtsanteil der Komponenten der Formel XV aus der Gruppe E kleiner als 30 % ist.

6. Flüssigkristallphase mit negativer dielektrischer Anisotropie mit mindestens zwei pleochroitischen Farbstoffen, dadurch gekennzeichnet, daß das Host-Material eine Flüssigkristallphase nach Anspruch 1 ist.

7. Flüssigkristallphase nach Anspruch 6, dadurch gekennzeichnet, daß das Host-Material mindestens zwei Komponenten aus der Gruppe A und eine Komponente aus der Gruppe D enthält.

8. Flüssigkristallphase nach einem der Ansprüche 6 und 7, dadurch gekennzeichnet, daß mindestens ein Farbstoff der Klasse der Azofarbstoffe angehört.

9. Flüssigkristallphase nach einem der Ansprüche 6 bis 8, dadurch gekennzeichnet, daß mindestens ein Farbstoff ein Azofarbstoff mit einer Wellenlänge maximaler Absorption größer als 580 nm ist.

10. Flüssigkristallphase nach einem der Ansprüche 6 bis 9, dadurch gekennzeichnet, daß ein die Flüssigkristallphase enthaltendes elektrooptisches Anzeigeelement einen nach CIE (1964) gemessenen Farbabstand bis Zum Achromasiepunkt kleiner als 5 Einheiten aufweist.

11. Verwendung der Flüssigkristallphase nach einem der Ansprüche 1 bis 10 in Flüssigkristallanzeigeelementen.

12. Flüssigkristallanzeigeelement, dadurch gekennzeichnet, daß es eine Flüssigkristallphase nach einem der Ansprüche 1 bis 10 enthält.

13. Elektrooptisches Anzeigeelement, dadurch gekennzeichnet, daß als Dielektrikum eine Flüssigkristallphase nach einem der Ansprüche 1 bis 10 enthält.

**Claims**

1. Liquid crystal phase, characterised in that it contains at least one component selected from Group A consisting of the compounds of the formulae I to IV

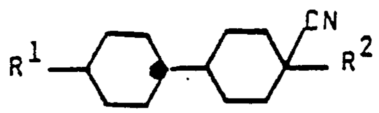

(I)

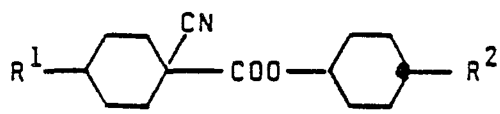

(II)

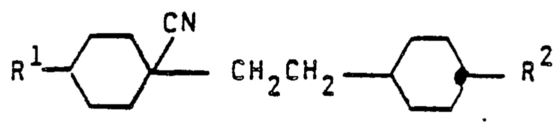

(III)

wherein $R^1$ and $R^2$ are each R,

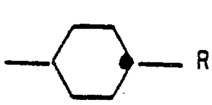

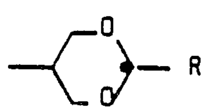

or

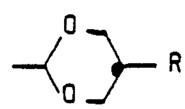

and R is alkyl with 1 to 12 C atoms, and wherein also one or two non-adjacent $CH_2$ groups can be replaced by —O—, —CO—, —O—CO— or —CO—O—,

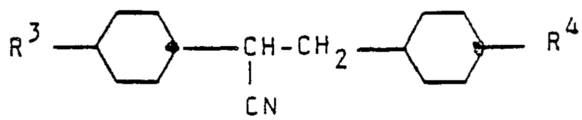

(IV)

wherein $R^3$ and $R^4$ are each R or

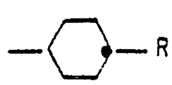

and R has the abovementioned meaning,
and/or at least one component selected from Group B consisting of the compounds of the formulae V and VI

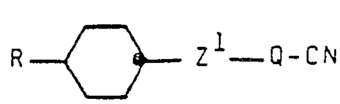

(V)

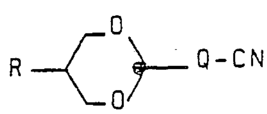

(VI)

wherein R has the abovementioned meaning, Q is

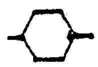

or

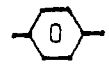

and $Z_1$ is

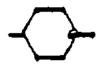

a single bond, $-CH_2CH_2-$, $-CO-O-$ or $-O-CO-$,
and at least one component selected from Group C consisting of the compounds of the formulae VII to X

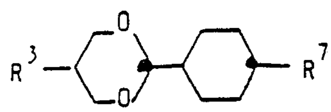

(VII)

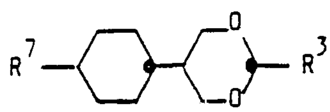

(VIII)

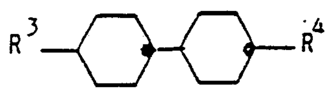

(IX)

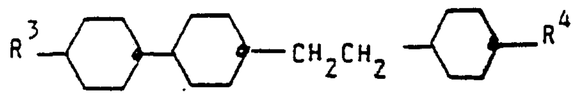

(X)

wherein $R^3$ and $R^4$ have the abovementioned meaning and $R^7$ can assume the meaning of

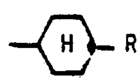

or $R^8$, wherein R is as defined above, and $R^8$ is alkyl with 1 to 12 C atoms, and wherein also one or two non-adjacent $CH_2$ groups can be replaced by $-O-$ or $-CO-$,
and, if appropriate, one or more components selected from Group D consisting of the compounds of the formulae XI to XIII

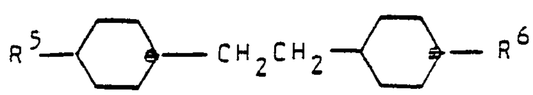

(XI)

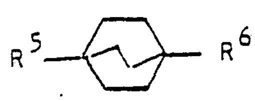

(XII)

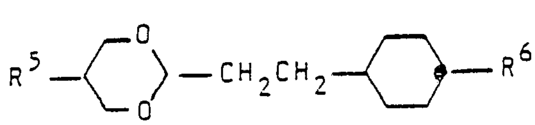

(XIII)

wherein $R^5$ and $R^6$ in each case independently of one another are alkyl with 1 to 12 C atoms, and wherein also one or two non-adjacent $CH_2$ groups can be replaced by $-O-$, $-CO-$, $-O-CO-$ or $-CO-O-$,
and, if appropriate, one or more components selected from Group E consisting of the compounds of the formulae XIV and XV

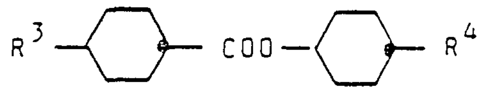

(XIV)

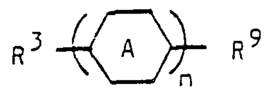

(XV)

wherein $R^3$ and $R^4$ are each R or

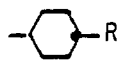

$R^9$ is R,

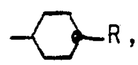 , 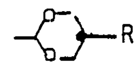

or, if n equals 2, also CN,
n is 2 or, if $R^3$ equals

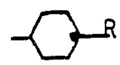

also 1 and
A is a 1,4-phenylene group which is optionally fluorinated in the 2- or 3-position,
with the proviso that, if compounds of the formula V and/or VI wherein Q is 1,4-phenylene are present, the liquid crystal phase contains at least one component of the formula IX wherein $R^3$ is n-alkyl and $R^4$ is n-alkyl, n-alkoxy or n-alkanoyloxy with in each case 1-12 C atoms, and at least one component from Group E.

2. Liquid crystal phase according to Claim 1, characterised in that it contains at least two components selected from Group A.

3. Liquid crystal phase according to Claim 1, characterised in that it contains at least two components selected from Group B.

4. Liquid crystal phase according to Claim 1, characterised in that it contains at least two components selected from Group A or B and at least one component selected from Group D.

5. Liquid crystal phase according to one of Claims 1, 2, 3 or 4, characterised in that the weight content of the components of the formula XV from Group E is less than 30 %.

6. Liquid crystal phase with negative dielectric anisotropy containing at least two pleochroic dyestuffs, characterised in that the host material is a liquid crystal phase according to Claim 1.

7. Liquid crystal phase according to Claim 6, characterised in that the host material contains at least two components from Group A and one component from Group D.

8. Liquid crystal phase according to one of Claims 6 and 7, characterised in that at least one dyestuff belongs to the class of azo dyestuffs.

9. Liquid crystal phase according to one of Claims 6 to 8, characterised in that at least one dyestuff is an azo dyestuff with a wavelength of maximum absorption of greater than 580 nm.

10. Liquid crystal phase according to one of Claims 6 to 9, characterised in that an electrooptical display element containing the liquid crystal phase has a colour interval, measured by CIU (1964), up to the point of achromatism of less than 5 units.

11. Use of the liquid crystal phase according to one of Claims 1 to 10, in liquid crystal display elements.

12. Liquid crystal display element, characterised in that it contains a liquid crystal phase according to one of Claims 1 to 10.

13. Electrooptical display element, characterised in that it contains, as the dielectric, a liquid crystal phase according to one of Claims 1 to 10.

**Revendications**

1. Phase à cristaux liquides caractérisée en ce qu'elle contient au moins un composant choisi dans le groupe A consistant en les composés de formules I à IV

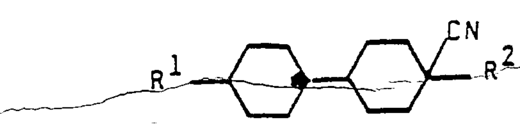

(I)

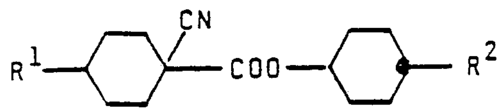

(II)

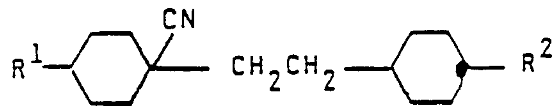

(III)

dans lesquelles $R^1$ et $R^2$ représentent chacun R,

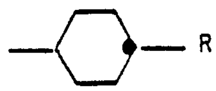 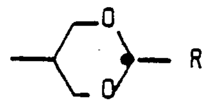 ou 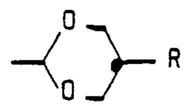

et R représente un groupe alkyle en C 1-C 12 dans lequel un ou deux groupes $CH_2$ non voisins peuvent encore être remplacés par —O—, —CO—, —O—CO— ou —CO—O,

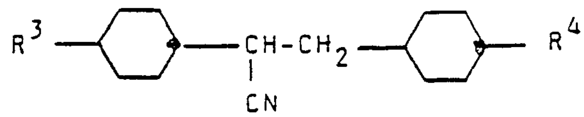

(IV)

dans laquelle $R^3$ et $R^4$ représentent chacun R ou

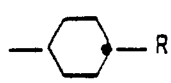

et R a les significations indiquées ci-dessus,
et/ou au moins un composant choisi dans le groupe B consistant en les composés de formules V et VI

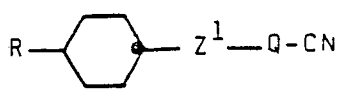

(V)

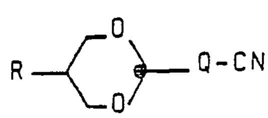

(VI)

dans lesquelles R a les significations indiquées ci-dessus, Q représente

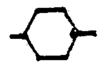 ou 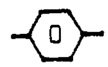

et $Z^1$ représente

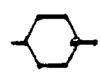

une liaison simple, $—CH_2CH_2—$, —CO—O ou —O—CO—,
et au moins un composant choisi dans le groupe C consistant en les composés de formules VII à X

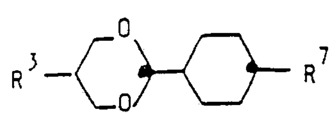

(VII)

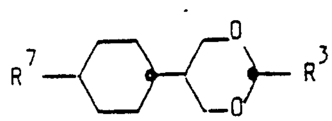

(VIII)

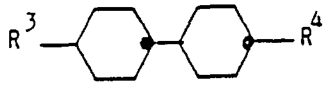 (IX)

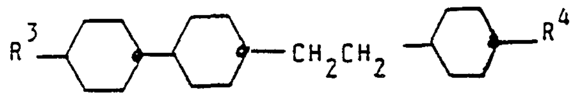 (X)

dans lesquelles $R^3$ et $R^4$ ont les significations indiquées ci-dessus et $R^7$ peut représenter

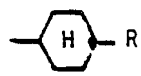

ou $R^8$, R ayant les significations indiquées ci-dessus et $R^8$ représentant un groupe alkyle en C 1-C 12 dans lequel un ou deux groupes $CH_2$ non voisins peuvent également être remplacés par —O— ou —CO—, et le cas échéant, un ou plusieurs composants choisis dans le groupe D consistant en les composés de formules XI à XIII

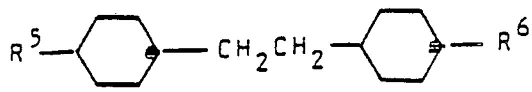 (XI)

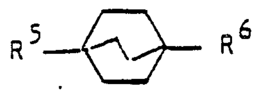 (XII)

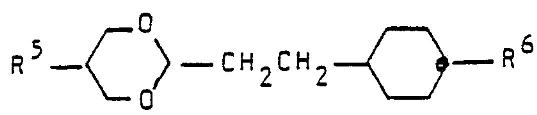 (XIII)

dans lesquelles $R^5$ et $R^6$ représentent chacun, indépendamment l'un de l'autre, un groupe alkyle en C 1-C 12 dans lequel un ou deux groupes $CH_2$ non voisins peuvent également être remplacés par —O—, —CO—, —O—CO— ou —CO—O—,
et le cas échéant, un ou plusieurs composants choisis dans le groupe E consistant en les composés de formules XIV et XV

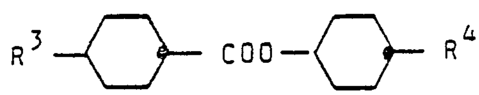 (XIV)

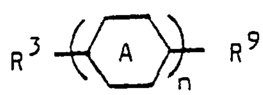 (XV)

dans lesquelles $R^3$ et $R^4$ représentent chacun R ou

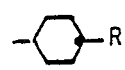

$R^9$ représente R,

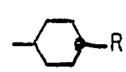 , 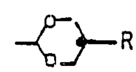

ou bien encore, lorsque n = 2, un groupe CN,
n est égal à 2, ou bien encore, lorsque $R^3$ représente

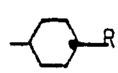

à 1,
A représente un groupe 1,4-phénylène éventuellement fluoré en position 2 ou 3,

sous réserve que la phase à cristaux liquides, dans le cas de la présence de composés de formules V et/ou VI dans lesquelles Q représente un groupe 1,4-phénylène, contient au moins un composant de formule IX dans laquelle $R^3$ représente un groupe n-alkyle et $R^4$ un groupe n-alkyle, n-alcoxy ou n-alcanoyloxy contenant chacun 1 à 12 atomes de carbone, et au moins un composant du groupe E.

2. Phase à cristaux liquides selon la revendication 1, caractérisée en ce qu'elle contient au moins deux composants choisis dans le groupe A.

3. Phase à cristaux liquides selon la revendication 1, caractérisée en ce qu'elle contient au moins deux composants choisis dans le groupe B.

4. Phase à cristaux liquides selon la revendication 1, caractérisée en ce qu'elle contient au moins deux composants choisis dans le groupe A ou le groupe B et au moins un composant choisi dans le groupe D.

5. Phase à cristaux liquides selon l'une des revendications 1, 2, 3 ou 4, caractérisée en ce que la proportion relative en poids des composants de formule XV du groupe E est inférieure à 30 %.

6. Phase à cristaux liquides à anisotropie diélectrique négative contenant au moins deux colorants pléochroïques, caractérisée en ce que la matière Host est une phase à cristaux liquides selon la revendication 1.

7. Phase à cristaux liquides selon la revendication 6, caractérisée en ce que la matière Host contient au moins deux composants du groupe A et un composant du groupe D.

8. Phase à cristaux liquides selon l'une des revendications 6 et 7, caractérisée en ce qu'un colorant au moins appartient à la classe des colorants azoïques.

9. Phase à cristaux liquides selon l'une des revendications 6 à 8, caractérisée en ce qu'un colorant au moins est un colorant azoïque présentant une longueur d'ondes d'absorption maximale supérieure à 580 nm.

10. Phase à cristaux liquides selon l'une des revendications 6 à 9, caractérisée en ce qu'un élément d'affichage électro-optique contenant la phase à cristaux liquides présente un intervalle de couleur jusqu'au point d'achromasie, mesuré selon CIE (1964) inférieur à 5 unités.

11. Utilisation de la phase à cristaux liquides selon l'une des revendications 1 à 10, dans des éléments d'affichage à cristaux liquides.

12. Elément d'affichage à cristaux liquides caractérisé en ce qu'il contient une phase à cristaux liquides selon l'une des revendications 1 à 10.

13. Elément d'affichage électro-optique caractérisé en ce qu'il contient en tant que diélectrique une phase à cristaux liquides selon l'une des revendications 1 à 10.